# EUROPÄISCHE PATENTSCHRIFT

(11) **EP 2 119 643 B1**
(45) Veröffentlichungstag und Bekanntmachung des Hinweises auf die Patenterteilung: **18.07.2012**
(21) Anmeldenummer: 09006591.3
(22) Anmeldetag: 15.05.2009
(51) Int. Cl.: B65G 1/137

(54) **Verfahren und Lagersystem zum Konsolidieren von Versandeinheiten**
Method and storage system for consolidating of shipping units
Procédé et système de stockage destinés à la consolidation d'unités d'expédition

(30) Priorität: 16.05.2008 AT 7832008
(43) Veröffentlichungstag der Anmeldung: 18.11.2009
(73) Patentinhaber: TGW Logistics Group GmbH, 4600 Wels (AT)
(72) Erfinder: Miranda, Febres Patricio,, 4600 Wels (AT); Lindley, Timothy, 4600 Wels (AT)
(74) Vertreter: Ofner, Clemens

(56) Entgegenhaltungen:
- EP-A- 1 136 395
- EP-A- 1 179 491

## Beschreibung

Die Erfindung betrifft ein Verfahren und ein Lagersystem zum Konsolidieren von Versandeinheiten mit auf Ladehilfsmitteln gestapelten Packeinheiten, wie im Oberbegriff der Ansprüche 1 und 13 beschrieben.

Aus der DE 20 2004 007 004 U1 ist ein Verfahren zum Konsolidieren von Versandeinheiten in einem Lagersystem bekannt, welches Lagersystem ein Zwischenlager mit einer Aufgabestation, Abgabestationen und eine diese verbindende automatisierte Fördertechnik aufweist, wobei die Versandeinheiten an Anlieferungsstationen im Wareneingang übernommen, im Zwischenlager in Lagerregale mit übereinanderliegenden Lagerebenen gepuffert und aus dem Zwischenlager zu Abgabestationen zur nachfolgenden Konsolidierung gefördert werden.

Ein Lagersystem mit einer Vielzahl von Lagerregalen und zwischen diesen entlang einer Regalgasse verfahrbaren Regalförderfahrzeugen ist auch aus der US 4,109,808 A bekannt, bei dem die in Ladehilfsmitteln befindlichen Packeinheiten (Artikeln) unterschiedlichen Artikeltyps so auf die einzelnen Lagerregale verteilt werden, dass in diesen annähernd dasselbe Sortiment an Artikeln vorhanden ist.

Aus der EP 1 179 491 A1 ist ein Lagersystem bekannt, welches ein Zwischenlager für in Behältern gelagerte Packeinheiten (Artikeln) und Kommissionierplätze zum Kommissionieren von Packeinheiten aus den Behältern in Kommissionierbehälter umfasst. Die Kommissionierplätze sind über Förderstrecken mit je einer Regalgasse des Zwischenlagers kreuzungsfrei verbunden. Außerdem sind Querförderstrecken vorgesehen, welche die Förderstrecken verbinden. Im Normalbetrieb werden die Behälter nicht über die Querförderstrecken gefördert. Im Störbetrieb (Notbetrieb), beispielsweise bei Ausfall eines Kommissionierplatzes oder Regalförderfahrzeuges im Zwischenlager, können die Behälter über die Querförderstrecken auf die Förderstrecken umgeleitet werden.

Es sind außerdem aus dem Stand der Technik Lagersysteme zum Konsolidieren von Versandeinheiten mit Packeinheiten hoher Umschlaghäufigkeit, so genannte "Schnelldreher", bekannt, welche einen Wareneingang, ein Zwischenlager, einen Konsolidierungsbereich und einen Warenausgang umfasst. Im Konsolidierungsbereich sind Ausgangspufferzonen vorgesehen, welche in Reihen hintereinander am Boden markierte Stellplätze aufweisen. Am Warenausgang sind Auslieferungsstationen vorgesehen und jeder Auslieferungsstation sind mehrere Reihen Stellplätze zugeordnet. Das Zwischenlager ist durch sich zwischen dem Wareneingang und dem Konsolidierungsbereich parallel erstreckende Staubahnen gebildet, wobei an einer jeden Staubahn an einem dem Konsolidierungsbereich zugewandten Ende eine Abgabestation vorgesehen ist und Packeinheiten (Collis) sortenrein gepuffert werden. Die Packeinheiten werden auf einem Ladehilfsmittel gestapelt und als Versandeinheit im Zwischenlager für 2 bis 5 Tage zwischengelagert.

Die Versandeinheiten werden von Lieferanten mit Transportfahrzeugen zum Lagersystem angeliefert. Die Transportfahrzeuge werden am Wareneingang Anlieferungsstationen koordiniert zugeteilt. Sodann werden die Versandeinheiten von einem Lagerarbeiter von den Lieferanten-Transportfahrzeugen abgeladen und auf die Staubahnen verteilt und in diesen zwischengelagert. Liegt ein Kundenauftrag vor, werden die Versandeinheiten im Konsolidierungsbereich von einer Konsolidierperson von den Abgabestationen entnommen und in einer für den Transport auf einem Ausliefer-Transportfahrzeug durch den Kundenauftrag festgelegten Auslieferreihenfolge zusammengestellt und in den Ausgangspufferzonen in dieser Reihenfolge bereitgestellt, ehe sie an den Auslieferungsstationen auf das Ausliefer-Transportfahrzeug geladen werden. Auf dem Ausliefer-Transportfahrzeug werden üblicherweise Versandeinheiten von nur einem Kunden geladen. Der Kundenauftrag kann dabei Bestellungen aus einer oder mehreren Filialen enthalten. Es ist aber auch denkbar, dass auf einem Ausliefer-Transportfahrzeug Versandeinheiten unterschiedlicher Kunden geladen werden, dann wenn der Kundenauftrag eines Kunden nur einen Teil des Laderaumes belegen würde. Mit anderen Worten wird anhand der durch den Kundenauftrag zu einem Kunden oder der Kundenaufträge unterschiedlicher Kunden festgelegten und von einem Computerprogramm optimierten Auslieferreihenfolge der Versandeinheiten die Beladung des Ausliefer-Transportfahrzeuges vorgegeben. Umfasst beispielsweise ein Kundenauftrag Bestellungen aus mehreren Filialen, so werden die Versandeinheiten, die als letztes ausgeliefert werden, in der tiefsten Ladeposition am Ausliefer-Transportfahrzeug geladen werden, während die Versandeinheiten, die als erstes ausgeliefert werden, in der vordersten Ladeposition am Ausliefer-Transportfahrzeug geladen werden. Die Zustellperson kann vor jeder Filiale die zu der Bestellung dieser Filiale angehörigen Versandeinheiten abladen, ohne eine Umschichtung von Versandeinheiten auf dem Ausliefer-Transportfahrzeug vornehmen zu müssen.

Ein Problem bei diesem Lagerkonzept besteht darin, dass durch das breite Sortiment an Packeinheiten auch eine beträchtliche Anzahl an Staubahnen und Abgabestationen erforderlich ist. In einem solchen Lagersystem werden üblicherweise bis zu 230 unterschiedliche Packeinheiten zwischengelagert. Damit verbunden ist ein großer Flächenbedarf sowohl im Zwischenlager als auch im Konsolidierungsbereich. Die Durchlaufzeiten der Versandeinheiten im Lagersystem vom Zwischenlager bis zum Warenausgang können auch nur dann ausreichend niedrig gehalten werden, wenn im Konsolidierungsbereich eine entsprechend hohe Anzahl an Konsolidierpersonen vorhanden ist, welche die Abgabestationen bedienen. Werden nur wenige Konsolidierpersonen eingesetzt, müssen diese sehr weite Wege zwischen den Abgabestationen und den einer Auslieferungsstation zugeordneten Stellplatzreihen der Ausgangspufferzonen zurücklegen. Das Umladen zwischen den Abgabestationen und Ausgangspufferzonen erfolgt mittels Gabelstapler. Nicht nur die Kosten für die Anschaffung der Gabelstapler, sondern auch die Personalkosten werden den heutigen Anforderungen eines wirtschaftlichen Lagersystems nicht gerecht. Hohe Lagerkosten sind zwangsweise die Folge.

Die Aufgabe der Erfindung liegt darin, ein Verfahren und ein Lagersystem zum Konsolidieren von Versandeinheiten mit auf Ladehilfsmitteln gestapelten Packeinheiten hoher Umschlaghäufigkeit zu schaffen, bei dem der Flächenbedarf sowohl im Zwischenlager als auch im Konsolidierungsbereich und die Lagerkosten verringert werden.

Die Aufgabe der Erfindung wird durch die Maßnahmen und Merkmale im Kennzeichenteil der Ansprüche 1 und 13 gelöst. Von Vorteil ist, dass die Lagerregale mit annähernd demselben Sortiment an Artikeln (Packeinheiten) bestückt werden und das Versandeinheiten-Verteilsystem in all seinen Förderabschnitten annähernd gleichmäßig ausgelastet ist. Somit kann an allen Lagerregalen im Zwischenlager auf das gleiche Artikelsortiment zurückgegriffen werden. Es ist dabei ein besonders schneller und wahlfreier Zugriff auf jede einzelne, im Zwischenlager gepufferte Versandeinheit möglich. Die Versandeinheiten werden auf kürzestem Wege auf die Abgabestationen verteilt und an diesen zur Abholung bereitgestellt. Es ist nur noch eine geringe Anzahl an Abgabestationen erforderlich und kann eine Konsolidierungsperson im Vergleich zu dem aus dem Stand der Technik bekannten Verfahren entlastet werden, da sie die Versandeinheiten nur noch zwischen wenigen Abgabestationen und Ausgangspufferzonen manipulieren muss. Mithin wird die Durchlaufzeit der Kundenaufträge erheblich verkürzt und ist bei hohen Durchsatzleistungen nur ein niedriger Personalbedarf erforderlich ist.

Von Vorteil ist auch die Maßnahme nach Anspruch 2, da ohne weitere Kommissionierschritte entsprechend einem Kundenauftrag sämtliche Versandeinheiten aus dem Lagerkanal ausgelagert werden können und damit die Durchlaufzeit von Kundenaufträgen weiter minimiert werden kann.

Gemäß der Maßnahme nach Anspruch 3 kann durch den Lagerverwaltungsrechner eine optimierte Verteilung der Versandeinheiten auf leere Lagerkanäle in den Lagerregalen vorgenommen werden.

Durch die Maßnahme nach Anspruch 4 wird die Verteilung der Versandeinheiten vor ihrer Einlagerung im Zwischenlager durch die Lagerarbeiter unter Berücksichtigung der Lagerkennzahl in einem der Lagerregale und/oder der Leistungskennzahl des Versandeinheiten-Verteilsystems koordiniert. Die Lagerarbeiter müssen keine unnötigen Wege zurücklegen. Es kann nun selbst bei der manuellen Handhabung der Versandeinheiten eine hohe Durchsatzleistung erreicht werden, da dem Lagerarbeiter die anzufahrende Aufgabestation und damit der Anfahrweg vorgegeben werden und nach der Übergabe der Versandeinheit auf die Aufgabestation diese umgehend in das Zwischenlager eingelagert wird.

Durch die Maßnahme nach Anspruch 5 werden die Lieferanten-Transportfahrzeuge unter Berücksichtigung der Lagerkennzahlen in den Lagerregalen und/oder der Leistungskennzahl des Versandeinheiten-Verteilsystems den Anlieferungsstationen automatisch zugewiesen und die Versandeinheiten stets dort angeliefert, wo sie auf kürzestem Wege in das Lagerregal, welches den Sollwert der Lagerkennzahl unterschreitet, eingelagert oder über das Versandeinheiten-Verteilsystem ohne Transportverzögerungen gefördert werden können.

Von Vorteil ist auch die Maßnahme nach Anspruch 6, da in den Eingangspufferzonen zusätzliche Versandeinheiten zwischengelagert werden können, beispielsweise wenn mehr Versandeinheiten angeliefert wurden als im Zwischenlager aufgenommen werden können.

Durch die Maßnahme nach Anspruch 7 wird sichergestellt, dass während der Manipulation der Versandeinheiten im Zwischenlager Kollisionen einer Lastaufnahmevornchtung mit dem Ladehilfsmittel und der Packeinheit mit dem Lagerregal vermieden und die Packeinheiten eindeutig identifiziert werden, ehe sie in das Lagerregal eingelagert werden.

Nach Anspruch 8 werden im Konsolidierungsbereich die Versandeinheiten in einer festgelegten Auslieferreihenfolge zusammengestellt, in der sie auf einen Auslieferungs-Transportfahrzeug geladen werden. Die Zustellperson kann vor jeder Filiale die Versandeinheiten in umgekehrter Reihenfolge, wie sie geladen wurden, entladen.

Von Vorteil sind auch die Maßnahmen nach den Ansprüchen 9 und 10, da die automatisierte Fördertechnik die Versandeinheiten stets in einer im Zwischenlager zentral angeordneten Bereitstellungsstation manipuliert und die Verfahrwege sich bei der Ein- und Auslagerung der Versandeinheiten relativ zur Länge des Zwischenlagers verkürzen. Damit kann die Spielzeit für die Ein- und Auslagerung der Versandeinheiten optimiert werden. Darüber hinaus kann durch die Entkoppelung des Förderflusses zwischen dem Regalförderfahrzeug und den Aufgabestationen, die Anzahl der Einlagerspiele hoch gehalten werden, obwohl die Versandeinheiten auf die Aufgabestationen manuell zugestellt werden.

Gemäß der Maßnahme nach Anspruch 11 werden die Ladehilfsmittel kleinerer Formatabmessung aus einem oder mehreren Lagerkanälen ausgelagert und zu einer Versandeinheiten-Gruppe bevorzugt gemäß einem Kundenauftrag zusammengefasst (Vorkonsolidierung) und diese zu einer Bereitstellungsstation gefördert. Beispielsweise werden auf der Lastaufnahmevorrichtung zwei oder mehrere Versandeinheiten aufgenommen. An der Bereitstellungsstation angekommen, wird die Versandeinheiten-Gruppe entweder zur Auslagerung über eine Puffer- und Auslagerförderbahn zu einer Abgabestation oder zur Umlagerung über einen ersten Versandeinheiten-Verteilabschnitt zu einer Bereitstellungsstation in einem anderen Lagermodul gefördert. Durch das Zusammenfassen der Versandeinheiten zu einer Gruppe können die Transportwege im Versandeinheiten-Verteilsystem, insbesondere des Regalförderfahrzeuges, verkürzt und die Durchsatzleistung angehoben werden. Darüber hinaus wird durch den gleichzeitigen Transport von mindestens zwei Versandeinheiten mit einem Ladehilfsmittel kleinerer Formatabmessung und der damit verbundenen kleineren Aufstandsfläche eine gegenseitige Ladungsstabilisierung bewirkt. Somit können auch auf einem Ladehilfsmittel mit kleinerer Formatabmessung relativ hohe Ladestapel manipuliert werden.

Von Vorteil ist auch die Maßnahme und Ausgestaltung nach den Ansprüchen 12 und 14, da nun auch "Eilaufträge" von Kunden berücksichtigt werden können und über das Versandeinheiten-Verteilsystem die zu einem "Eilauftrag" angeforderten Versandeinheiten automatisch an der Abgabestation bereitgestellt werden, wo sie die Konsolidierungsperson entnimmt und in eine Ausgangspufferzone transportiert. Es kann nach dem Auslösen eines "Eilauftrages" besonders rasch reagiert und der "Eilauftrag" noch im aktuellen Routenplan berücksichtigt werden bzw. noch innerhalb weniger Minuten eine oder mehrere Versandeinheiten auf das Ausliefer-Transportfahrzeug geladen werden.

Zum besseren Verständnis der Erfindung wird diese anhand der nachfolgenden Figuren näher erläutert.

Es zeigen jeweils in stark schematisch vereinfachter Darstellung:
- Fig. 1a, 1b: eine Draufsicht auf ein erfindungsgemäßes Lagersystem in stark vereinfachter schematischer Darstellung;

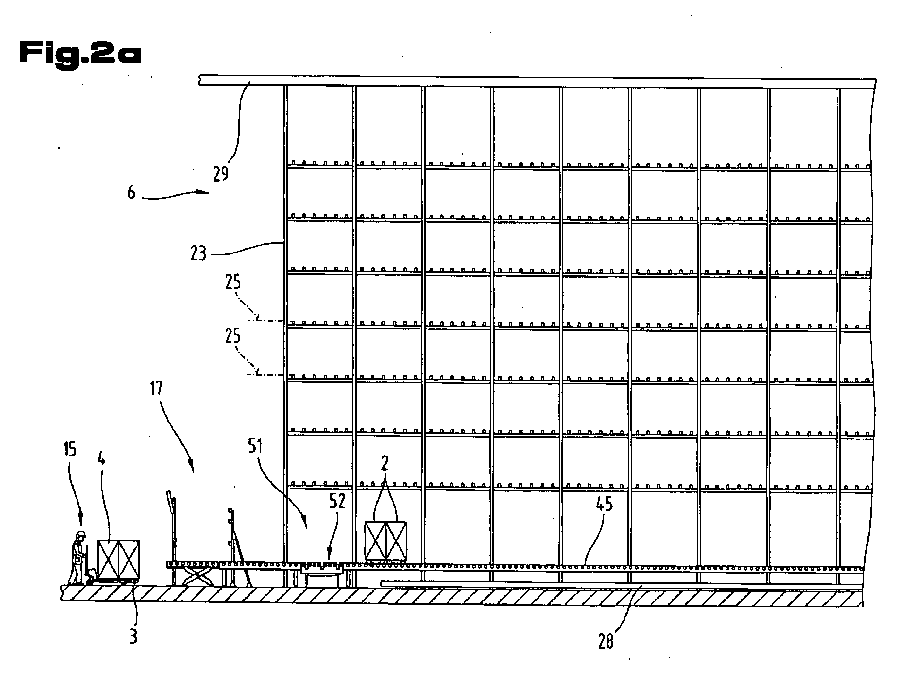

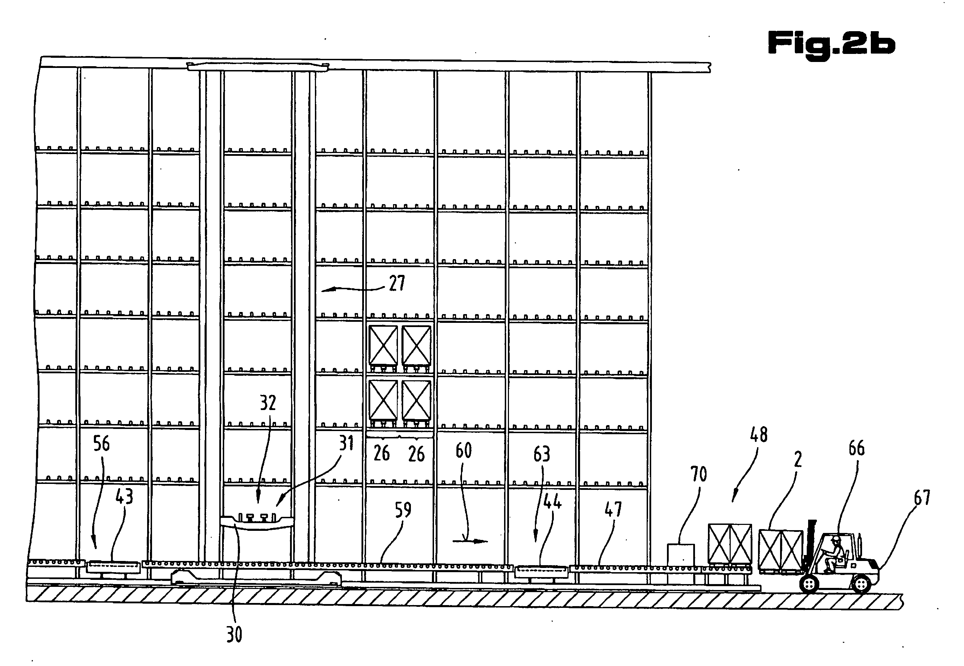

- Fig. 2a, 2b: das Lagersystem nach Fig. 1a, 1b in Ansicht gemäß den Linien II - II;
- Fig. 3: eine Ausschnittsvergrößerung aus dem Wareneingang, in stark vereinfachter schematischer Darstellung;

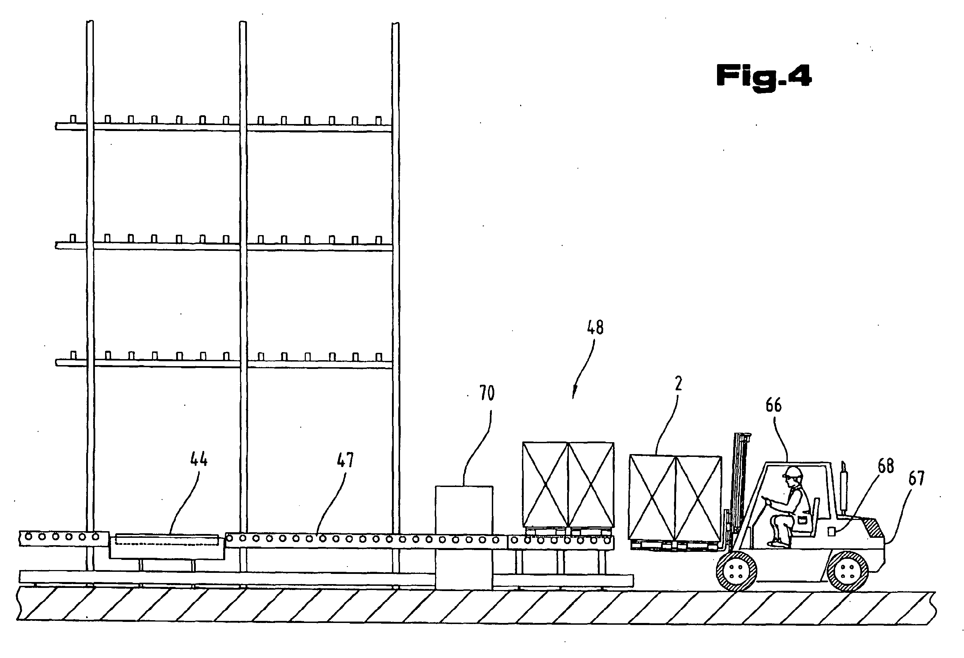

- Fig. 4: eine Ausschnittsvergrößerung aus dem Konsolidierungsbereich gemäß Fig. 2b.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

In den gemeinsam beschriebenen Fig. ist ein erfindungsgemäßes Lagersystem 1 zum Konsolidieren von Versandeinheiten 2 in unterschiedlichen Ansichten gezeigt. Die Versandeinheit 2 wird durch ein Ladehilfsmittel 3, beispielsweise eine EURO-Palette, und auf ihm gegebenenfalls sortenrein gestapelte Packeinheiten 4 (Collis), wie etwa Kartons, gebildet. Das Lagersystem 1 umfasst einen Wareneingang 5, ein Zwischenlager 6 (Hochregallager), einen Warenausgang 7, zwischen dem Wareneingang 5 und dem Zwischenlager 6 angeordnete Eingangspufferzonen 8 und zwischen dem Warenausgang 7 und dem Zwischenlager 6 einen Konsolidierungsbereich 9 sowie ein Versandeinheiten-Verteilsystem. Im Konsolidierungsbereich 9 sind Ausgangspufferzonen 10 vorgesehen. Die Eingangs- und Ausgangspufferzonen 8, 10 weisen jeweils in Reihe hintereinander angeordnete Stellplätze 11, 12 auf, die in einer Ausführung beispielsweise am Boden des Lagergebäudes ausgebildet und durch Markierungen gekennzeichnet sind.

Am Wareneingang 5 sind mehrere Anlieferungsstationen 13 vorgesehen, an denen Lieferanten-Transportfahrzeuge 14, insbesondere Lastwagen, andocken, und von einem Lagerarbeiter 15 die Versandeinheiten 2 auf einem Verteilwagen 16 übernommen und entweder in einer der Eingangspufferzonen 8 auf wenigstens einem Stellplatz 11 zwischengelagert oder zu einer das Versandeinheiten-Verteilsystem auf einer den Eingangspufferzonen 8 zugewandten Seite aufweisenden Aufgabestation 17 transportiert werden.

Am Wareneingang 5 ist zumindest eine Ein- und/oder Ausgabevorrichtung 18, die eine optische und/oder akustische Anzeige, beispielsweise einen Bildschirm, umfasst, mittels welcher dem Lenker des Transportfahrzeuges angegeben wird, an welcher Anlieferungsstation 13 er mit seinem Transportfahrzeug andocken muss, wie später noch näher beschrieben wird. Es können aber auch mehrere Ein- und/oder Ausgabevorrichtungen 18 vorgesehen sein.

Das Zwischenlager 6 ist in mehrere Lagermodule 19, 20, 21, 22 aufgeteilt und weist das Versandeinheiten-Verteilsystem in den Lagermodulen 19, 20, 21, 22 jeweils eine automatisierte Fördertechnik auf. Die Lagermodule 19, 20, 21, 22 umfassen jeweils parallel nebeneinander angeordnete Lagerregale 23, wobei zwischen den mit Abstand einander gegenüberliegenden Lagerregalen 23 eine Gasse 24 ausgebildet ist. Die Lagerregale 23 weisen in einem Rasterabstand vertikal übereinander liegende Lagerebenen 25 auf, die beispielsweise von Tragbalken ausgebildet sind. In jeder Lagerebene 25 sind mehrere "virtuelle" Lagerkanäle 26 nebeneinander angeordnet, wobei der Lagerkanal 26 in seiner Längserstreckung zumindest zwei Lagerplätze aufweist und in einem Lagerkanal 26 zumindest zwei mittig zueinander ausgerichtete Versandeinheiten 2 in einer Reihe hintereinander abgelegt werden können.

Die automatisierte Fördertechnik weist nach diesem Ausführungsbeispiel ein Regalförderfahrzeug 27, insbesondere Regalbediengerät, auf, welches in der Gasse 24 entlang eines Schienensystems 28, 29 an der Regalfront verfahrbar ist und mit einer heb- und senkbaren Plattform 30 ausgestattet ist. Auf der Plattform 30 ist eine Lastaufnahmevorrichtung angeordnet, die wenigstens eine Fördervorrichtung 31 und eine relativ zur Plattform 30 nach beiden Richtungen ausfahrbare Ein- und Auslagerungsvorrichtung 32, insbesondere Teleskopgabeln, aufweist, mittels welcher Versandeinheiten 2 in einen Lagerkanal 26 des links oder rechts von der Gasse 24 aufgestellten Lagerregals 23 ein- bzw. ausgelagert werden können. Die Fördervorrichtung 31 ist beispielsweise durch einen Zweispurförderer gebildet. Dieser weist parallel zur Ausfahrrichtung der Ein- und Auslagerungsvorrichtung 32 verlaufende Linearförderer auf, die zu beiden Seiten der Ein- und Auslagerungsvorrichtung 32 angeordnet sind.

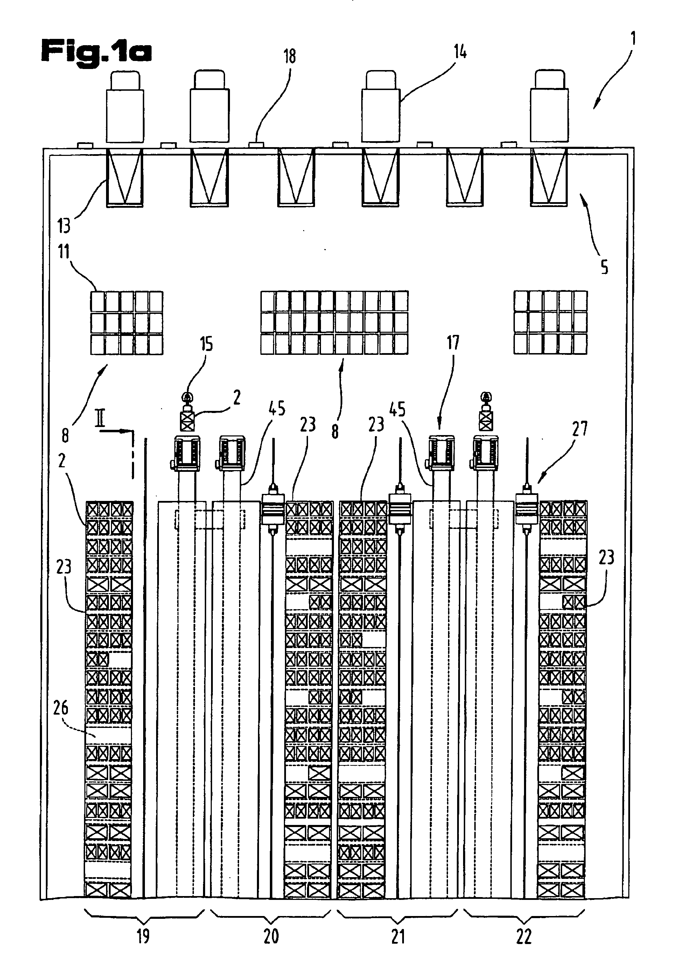

Wie in Fig. 1a ersichtlich, können die Ladehilfsmittel 3 bzw. Versandeinheiten 2 unterschiedliche Formatabmessungen aufweisen, beispielsweise 800 mm x 1200 mm oder 800 mm x 600 mm. Jedoch ist eine der Seitenlänge der Ladehilfsmittel 3 gleich. Die Breite der Lagerkanäle 26 ist annähernd auf diese Seitenlänge des Ladehilfsmittels 3 angepasst und werden die Versandeinheiten 2 großer Formatabmessung im Längstransport, daher werden die Versandeinheiten 2 mit ihrer längeren Seite in Ein- und Auslagerrichtung eingelagert, oder die Versandeinheiten 2 kleiner Formatabmessung im Quertransport, daher wird die Versandeinheit 2 mit ihrer kürzeren Seite in Ein- und Auslagerrichtung eingelagert. Die Ein- und Auslagerungsvorrichtung 32 kann entweder eine einzelne Versandeinheit 2 mit der Formatabmessung 800 mm x 1200 mm oder vorzugsweise zwei Versandeinheiten 2 mit den Formatabmessungen 800 mm x 600 mm als Pärchen (Versandeinheiten-Gruppe) manipulieren.

Das Pärchen mit den Versandeinheiten 2 kleinerer Formatabmessungen wird mit der Ein- und Auslagerungsvorrichtung 32 im Quertransport manipuliert, daher werden die Versandeinheiten 2 mit ihrer kürzeren Seite in Ein- und Auslagerrichtung bewegt.

Die Versandeinheit 2 größerer Formatabmessung wird mit der Ein- und Auslagerungsvorrichtung 32 im Längstransport manipuliert, daher wird die Versandeinheit 2 mit ihrer längeren Seite in Ein- und Auslagerrichtung bewegt.

Sind die Packeinheiten 4 auf einem Ladehilfsmittel 3 kleinerer Formatabmessung gestapelt, ist die Stapelhöhe des Ladestapels niedriger als die Stapelhöhe des Ladestapels auf einem Ladehilfsmittel 3 größerer Formatabmessung. Vor diesem Hintergrund kann der Rasterabstand zwischen den Lagerebenen 25 unterschiedlich ausgebildet sein. Dies hat den Vorteil, dass das Lagervolumen im Zwischenlager 6 noch besser genutzt werden kann und eine noch höhere Anzahl an Versandeinheiten 2 gepuffert werden können.

In einer anderen, nicht gezeigten Ausführung ist die Ein- und Auslagerungsvorrichtung durch einen Transportwagen - ein so genanntes Satellitenfahrzeug - gebildet, der an beiden Wagenseiten mehrere über einen Fahrantrieb antreibbare Laufräder und über einen Hubantrieb relativ zum Transportwagen heb- und senkbare Tragprofile aufweist. Lagersysteme, welche zum Ein- und Auslagern der Versandeinheiten 2 Transportwagen verwenden, haben den Vorteil, dass innerhalb eines Lagerkanals 26 eine oder eine Vielzahl von Versandeinheiten 2 hintereinander ein- und ausgelagert werden können.

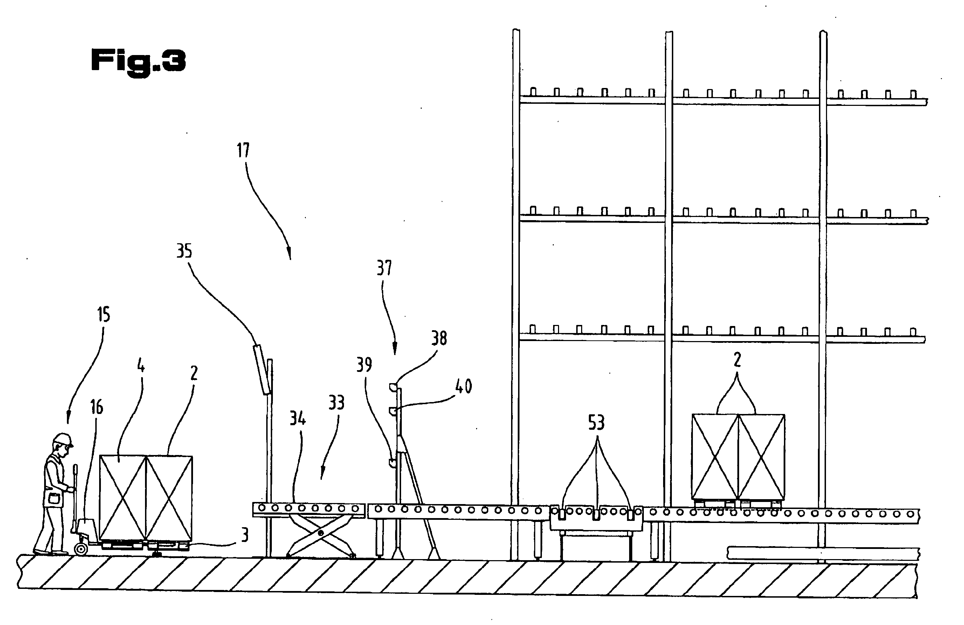

Wie in der Fig. 3 besser ersichtlich, weist die Aufgabestation 17 einen zwischen einer abgesenkten Übernahmestellung und einer angehobenen Förderstellung verstellbaren Hubtisch 33 auf, der mit einer Förderbahn 34 ausgestattet ist. Die Förderbahn 34 ist beispielsweise durch, mit Abstand parallel verlaufenden Rollen gebildet. Genauso gut kann die Förderbahn 34 auch durch einen Bandförderer und dgl. gebildet sein.

Die Aufgabestationen 17 sind jeweils mit einer Ein- und/oder Ausgabevorrichtung 35 ausgestattet, die durch eine optische und/oder akustische Anzeige, beispielsweise einen Bildschirm, gebildet ist, mittels welcher vom Lagerverwaltungsrechner einem Lagerarbeiter 15 angewiesen wird, welche Versandeinheit 2 auf welcher Aufgabestation 17 aufgegeben werden muss. Dadurch wird nicht durch der Warenfluss koordiniert, sondern auch die Zuteilung von Versandeinheiten 2 auf eine für diese nicht bestimmte Aufgabestation 17 vermieden.

Das Versandeinheiten-Verteilsystem umfasst an jeder Aufgabestation 17 eine Prüfstation 37, mittels welcher die Qualität des Ladehilfsmittels 3, der Beladungszustand auf dem Ladehilfsmittel 3 und/oder eine Eingangskontrolle der Packeinheiten 4 noch vor der Einlagerung der Versandeinheit 2 in das Zwischenlager 6 durchgeführt wird.

Die Versandeinheiten 2 werden im Zwischenlager 6 von der Ein- und Auslagerungsvorrichtung 32 in einen Lagerkanal 26 eingelagert bzw. aus einem Lagerkanal 26 ausgelagert. Dabei muss sichergestellt sein, dass ein Ladehilfsmittel 3 mittels der Ein- und Auslagerungsvorrichtung 32 kollisionsfrei aufgenommen werden kann. Die Ladehilfsmittel 3 weisen vorzugsweise einen Boden, Abstellfüße und zwischen diesen ausgebildete Freiräume auf, in welche zur Ein- bzw. Auslagerung der Versandeinheiten 2 die Ein- und Auslagerungsvorrichtung 32, beispielsweise die Teleskopgabeln einfahren können. Nur wenn die Freiräume sichergestellt sind, können die Teleskopgabeln kollisionsfrei einfahren und die Ein- bzw. Auslagerung der Versandeinheiten 2 sachgemäß erfolgen.

Die Prüfstation 37 weist eine nicht dargestellte Sensorik auf, die am Hubtisch 33 unterhalb des auf ihm auflastenden Ladehilfsmittels 3 angeordnet ist und mittels welcher die Konturen der Freiräume bzw. die diese zumindest bereichsweise begrenzenden Abstellfüße und/oder der Boden abgetastet wird. Die Sensorik kann beispielsweise durch optische oder elektromechanische Sensoren gebildet sein.

Ist das Ladehilfsmittel 3 am Boden und/oder an den Abstellfüßen soweit beschädigt, dass eine der Teleskopgabeln nicht kollisionsfrei in den Freiraum einfahren kann, wird dies an der Prüfstation 37 über die Sensorik erfasst und von einem elektronischen Auswertemodul ausgewertet und dem Lagerarbeiter 15 an der Ausgabevorrichtung 35 als Fehlermeldung angezeigt. Der Lagerarbeiter 15 ist angehalten, die Versandeinheit 2 von der Aufgabestation 17 zu entfernen und das beschädigte Ladehilfsmittel 3 durch ein ordnungsgemäßes Ladehilfsmittel 3 zu ersetzen.

Die Prüfstation 37 umfasst ferner eine Sensorik 38, mit welcher die Länge des Ladestapels auf dem Ladehilfsmittel 3, daher die Länge der Versandeinheit 2 erfasst wird. Die Breite des Ladestapels, daher die Breite der Versandeinheit 2 wird durch zu beiden Seiten der Förderbahn 34 angeordnete Sensoriken 39 erfasst. Die Höhe des Ladestapels bzw. der Versandeinheit 2 wird über eine Sensorik 40 erfasst. Die Breite, Höhe und Länge der Versandeinheit 2 wird mit im Lagerverwaltungsrechner hinterlegten Sollwerten verglichen und erhält der Lagerarbeiter 15 an der Ausgabevorrichtung 35 eine Rücknahmemeldung, wenn einer der Istwerte der Breite, Höhe und Länge einen Sollwert überschreitet. Der Lagerarbeiter 15 muss diese Versandeinheit 2 wieder vom Hubtisch 33 entfernen.

Durch die Erfassung der Breite, Höhe und Länge der Versandeinheit 2 kann auch der Belegungszustand auf dem Ladehilfsmittel 3 ermittelt werden, beispielsweise eine Schiefstellung des Ladestapels, ein seitlicher Überstand des Ladestapels am Rand des Ladehilfsmittels 3 oder ein seitlicher Überstand einer Packeinheit 4 relativ zum Boden des Ladehilfsmittels 3 und dgl.

Des Weiteren wird an der Prüfstation 37 über ein Lesegerät die Lesequalität eines von Seiten des Herstellers/Lieferanten der Packeinheiten 4 auf das Ladehilfsmittel 3 aufgebrachten Datenträgers, insbesondere eines Barcodes ermittelt. Können die Daten aus dem Datenträger vollständig ausgelesen werden, wird die Versandeinheit 2 von der Hubstation 33 abtransportiert und in das Zwischenlager 6 eingelagert.

Können die Daten hingegen nur unzureichend ausgelesen werden, weil dieser beispielsweise in Folge des Transportes der Versandeinheiten 2 zum Lagersystem 1 teilweise beschädigt wurde, wird dem Lagerarbeiter 15 eine Fehlermeldung auf der Ausgabevorrichtung 35 angezeigt. Der Lagerarbeiter 15 hat nun dafür zu sorgen, dass er an der Eingabevorrichtung 35 beispielsweise aus einer Packeinheiten-Bestandsliste, die das gesamte Sortiment von Packeinheiten 4 repräsentiert, die Packeinheit 4 identifiziert, welche die Versandeinheit 2 enthält. Durch Auswahl der entsprechenden Packeinheit 4 aus der Bestandsliste wird ein neuer Datenträger hergestellt, beispielsweise eine neue Barcodeetikette an einem Drucker ausgedruckt. Der Datenträger wird entweder manuell vom Lagerarbeiter 15 oder automatisch über eine Aufbringungsvorrichtung am Ladehilfsmittel 3 befestigt. Erst danach wird die Versandeinheit 2 vom Hubtisch 33 abtransportiert und in das Zwischenlager 6 eingelagert.

Die automatisierte Fördertechnik des Versandeinheiten-Verteilsystems weist, wie oben beschrieben, in mehreren Förderabschnitten die Aufgabestationen 17, Regalförderfahrzeuge 27, Einlagerförderbahnen 45, eine Förderumlaufbahn 46, Auslagerförderbahnen 47, Abgabestationen 48, zwischen den Aufgabe- und Abgabestationen 17, 48 angeordnete Bereitstellungsstationen 49 sowie Übernahmestationen 50 auf. Die Förderumlautbahn 46 verbindet die Lagermodule 19 bis 22.

In jedem Lagermodul 19 bis 22 ist eine sich unterhalb und parallel zu einem Lagerregal 23 erstreckende Einlagerförderbahn 45 angeordnet, welche eine Aufgabestation 17 mit der Förderumlaufbahn 46 verbindet und einen Stauabschnitt aufweist, in welchem die von der Aufgabestation 17 in Richtung zur Förderumlaufbahn 46 geförderten Versandeinheiten 2 temporär gepuffert werden, wenn sich in der Förderumlaufbahn 46 bereits eine hohe Anzahl an Versandeinheiten 2 befindet. Die Einlagerförderbahn 45 ist beispielsweise durch einen Rollenförderer, Bandförderer und dgl. gebildet.

Wie in den Fig. eingetragen, sind die Einlagerförderbahnen 45 mit einer Umsetzfördervorrichtung 51 versehen und über eine Querförderbahn 52 miteinander verbunden. Die Umsetzfördervorrichtung 51 weist auf einem anhebbaren und absenkbaren Tragrahmen gelagerte und von einem nicht dargestellten Antriebsmotor antreibbare Förderorgane 53, insbesondere Fördergurte, Förderrollen und dgl., auf. Die Querförderbahn 52 ist beispielsweise durch einen Rollenförderer, Bandförderer und dgl. gebildet. In der abgesenkten Stellung des Tragrahmens liegt eine Förderebene der Förderorgane 53 unterhalb der Förderebene der Einlagerförderbahn 45, während in der angehobenen Stellung des Tragrahmens die Förderorgane 53 aus der Förderebene der Einlagerförderbahn 45 herausragen und die Förderebene der Förderorgane 53 mit der Förderebene der Querförderbahn 52 fluchtet.

Damit ist es nun möglich, dass die Versandeinheiten 2 einer Aufgabestation 17 nicht fest zugeteilt werden müssen, sondern der Lagerarbeiter 15 die Versandeinheiten 2 auch an jener Aufgabestation 17 aufgeben kann, welche gerade nicht belegt ist. Andererseits können die Versandeinheiten 2 auch zwischen den Einlagerförderbahnen 45 gefördert werden, wenn die Auslastung in einer der Einlagerförderbahnen 45 geringer ist als in der anderen Einlagerförderbahn 45. Dadurch wird schon bei der Beförderung der Versandeinheiten 2 von der Aufgabestation 17 zur Förderumlaufbahn 46 darauf geachtet, dass die Auslastung zwischen den Einlagerförderbahnen 45 annähernd angepasst wird.

Die zwischen den Einlagerförderbahnen 45 und den Auslagerförderbahnen 47 angeordnete Förderumlaufbahn 46 umfasst einen den Einlagerförderbahnen 45 benachbarten, ersten Versandeinheiten-Verteilförderabschnitt, einen den Auslagerförderbahnen 47 benachbarten, zweiten Versandeinheiten-Verteilförderabschnitt und einen zwischen diesen ausgebildeten Versandeinheiten- Pufferförderabschnitt.

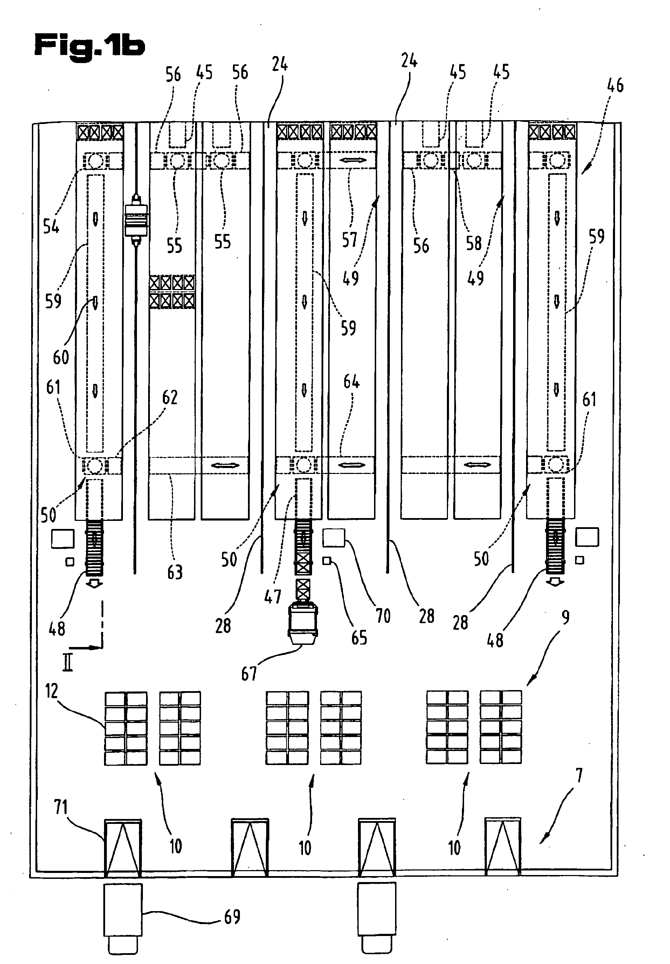

Wie in Fig. 1b ersichtlich, umfasst die Förderumlautbahn 46 im ersten Versandeinheiten-Verteilförderabschnitt an den Pufferförderabschnitt anschließende Zulieferförderbahnen 54, an das stirnseitige Ende der Einlagerförderbahnen 45 anschließende Verteilförderbahnen 55 und zwischen den Zulieferförder- und Verteilförderbahnen 54, 55 durch die Gasse 24 mit Abstand voneinander angeordnete Umlagerförderbahnen 56, 57 sowie zwischen den Verteilförderbahnen 55 Verbindungsförderbahnen 58. Die Bereitstellungsstationen 49 sind durch die Umlagerförderbahnen 56, 57 gebildet und in jedem Lagermodul 19 bis 22 vorgesehen. Die Förderbahnen 54 bis 58 sind bevorzugt jeweils mit zumindest einem durch einen nicht weiter dargestellten Antriebsmotor angesteuerten Fördermittel versehen. Das Fördermittel ist beispielsweise durch ein endlos umlaufendes Zugmittel, wie Kette, Band, Gurt, oder durch eine Vielzahl von mit Abstand hintereinander angeordneten Förderrollen gebildet. Die Antriebsrichtung der Antriebsmotoren ist reversierbar, sodass die Versandeinheiten 2 entlang dem ersten Verteilabschnitt relativ zu den Einlagerförderbahnen 45 nach links oder rechts gefördert werden können, wie durch den Doppelpfeil angedeutet. Die Fördermittel der Förderbahnen 54 bis 58 bilden eine horizontale Förderebene für die Versandeinheiten 2 aus.

Die Verteil- und Zulieferförderbahnen 54, 55 umfassen zusätzlich jeweils eine nicht dargestellte Versandeinheiten-Umsetzfördervorrichtung, mittels welcher die Versandeinheiten 2 einerseits von einer Einlagerförderbahn 45 übernommen und auf die Verteilförderbahn 55 übergeben werden kann und andererseits von der Umsetzfördervorrichtung übernommen und auf eine Pufferförderbahn 59 übergeben werden. Die Umsetzfördervorrichtung umfasst vorzugsweise einen drehbaren Tragrahmen, an dem eine Fördervorrichtung 43 gelagert ist und eine Drehvorrichtung ausbildet, mittels welcher die Versandeinheiten 2 um 90° relativ zur Einlagerförder- und Pufferförderbahn 45, 59 gedreht werden können. Die Fördervorrichtung 43 umfasst vorzugsweise eine Rollenbahn und weist von einem nicht dargestellten Antriebsmotor antreibbare Förderrollen auf. Die Förderrichtung der Fördervorrichtung 43 ist reversierbar. Andererseits kann die Fördervorrichtung 43 auch Fördergurte, Förderketten und dgl. umfassen. Die Förderebene der Fördervorrichtung 43 und die Förderebenen der Förderbahnen 45, 55 bis 59 fluchten.

Wie in Fig. 1b ersichtlich, weist der Pufferförderabschnitt der Förderumlautbahn 46 eine der Anzahl der Auslagerförderbahnen 47 entsprechende Anzahl von Pufferförderbahnen 59 auf, die mit ihren einem Ende unmittelbar an die Zulieferförderbahnen 54 anschließen und parallel zu den Lagerregalen 23 verlaufen. Die Pufferförderbahnen 59 sind jeweils durch einen Stauförderer gebildet und weisen in Richtung des Förderflusses - gemäß Pfeil 60 - hintereinander angeordnete Stauplätze auf. Der Stauförderer ist je Stauplatz mit wenigstens einem von einem Antriebsmotor angetrieben Fördermittel ausgestattet. Die Versandeinheiten 2 werden auf der Pufferförderbahn 59 jeweils um einen Stauplatz in Richtung des Förderflusses - gemäß Pfeil 60 - gefördert, wenn eine Versandeinheit 2 vom am weitesten stromabwärts angeordneten Stauplatz abgefördert und dieser frei gegeben wird.

Die Förderumlaufbahn 46 weist im zweiten Versandeinheiten-Verteilabschnitt zwischen den einander zugewandten Enden der Pufferförderbahn 59 und der Auslagerförderbahn 47 eine Einschleusförderbahn 61 sowie zwischen den Einschleusförderbahnen 61 durch die Gasse 24 mit Abstand voneinander angeordnete Umlagerförderbahnen 62 bis 64 auf. Die Einschleusförderbahn 61 und die Umlagerförderbahn 62 bilden eine Übernahmestation 50 für priorisierte Versandeinheiten 2 aus. Die Förderbahnen 61 bis 64 sind bevorzugt jeweils mit zumindest einem durch einen nicht weiter dargestellten Antriebsmotor angesteuerten Fördermittel versehen. Das Fördermittel ist beispielsweise durch ein endlos umlaufendes Zugmittel, wie Kette, Band, Gurt, oder durch eine Vielzahl von mit Abstand hintereinander angeordneten Förderrollen gebildet. Die Antriebsrichtung der Antriebsmotoren ist reversierbar, sodass die Versandeinheiten 2 entlang dem zweiten Verteilabschnitt relativ zu den Auslagerförderbahnen 47 nach links oder rechts gefördert werden können, wie durch die Doppelpfeile angedeutet. Die Fördermittel der Förderbahnen 61 bis 64 bilden eine horizontale Förderebene für die Versandeinheiten 2 aus.

Die Einschleusförderbahnen 61 umfassen zusätzlich jeweils eine nicht dargestellte Versandeinheiten-Umsetzfördervorrichtung, mittels welcher die Versandeinheiten 2 von einer Pufferförderbahn 59 übernommen und auf die Einschleusförderbahn 61 übergeben werden. Die Umsetzfördervorrichtung umfasst vorzugsweise einen drehbaren Tragrahmen, an dem eine Fördervorrichtung 44 gelagert ist und eine Drehvorrichtung ausbildet, mittels welcher die Versandeinheiten 2 um 90° relativ zur Auslagerförder- und Pufferförderbahn 47, 59 gedreht werden können. Die Fördervorrichtung 44 umfasst vorzugsweise eine Rollenbahn und weist von einem nicht dargestellten Antriebsmotor antreibbare Förderrollen auf. Die Förderrichtung der Fördervorrichtung 44 ist reversierbar. Andererseits kann die Fördervorrichtung 44 auch Fördergurte, Förderketten und dgl. umfassen. Die Förderebene der Fördervorrichtung 44 und die Förderebenen der Förderbahnen 47, 59 bis 64 fluchten.

Die Auslagerförderbahnen 47 sind in Verlängerung zu den Pufferförderbahnen 59 angeordnet und ebenso als Stauförderer ausgebildet, die in Richtung des Förderflusses 60 hintereinander angeordnete Stauplätze für die Versandeinheiten 2 aufweisen. Jeder Stauplatz weist ein Fördermittel auf, welches abhängig von Belegungszustand des stromabwärts angeordneten Stauplatzes entweder angetrieben oder stillgesetzt wird. Die Auslagerförderbahnen 47 sind zur Beförderung der Versandeinheiten 2 zu den stromabwärts ausgebildeten Abgabestationen 48 jeweils mit einem nicht dargestellten Antriebsmotor versehen.

Die Versandeinheiten 2, insbesondere die Ladehilfsmittel 3 sind mit dem oben beschriebenen Datenträger versehen, der Daten, zumindest eine Artikelnummer enthält. Diese Daten werden von einem Lesegerät 65 an der Abgabestation 48 ausgelesen und die an der Abgabestation 48 bereitgestellte Versandeinheit 2 einem Kundenauftrag zugeordnet.

Wie in Fig. 1b ersichtlich, befindet sich im Konsolidierungsbereich 9 eine Konsolidierungsperson 66, die vorzugsweise mittels eines Gabelstaplers 67 die an den Abgabestationen 48 bereitgestellten Versandeinheiten 2 abholt und zu den Abstellplätzen 12 in den Ausgangspufferzonen 10 transportiert und dort in der durch den Lagerverwaltungsrechner festgelegten Auslieferreihenfolge abstellt. Mit dem Gabelstapler 67 werden entweder eine einzelne Versandeinheit 2 mit der Formatabmessung 800 mm x 1200 mm oder, wie gezeigt, vorzugsweise zwei Versandeinheiten 2 mit den Formatabmessungen 800 mm x 600 mm als Pärchen manipuliert.

Die Konsolidierungsperson 66 kommuniziert über eine Ein- und/oder Ausgabevorrichtung 68 mit dem Lagerverwaltungsrechner, in dem in einer Datenbank eine elektronische Kundenauftragsliste hinterlegt ist. Zusätzlich umfasst der Lagerverwaltungsrechner ein Routenplanungsmodul, mittels welchem aus dem vom Lagerverwaltungsrechner erfassten Kundenauftrag ein optimierter Routenplan, in der eine oder mehrere Filialen angefahren werden, und/oder die optimierte Auslieferreihenfolge bzw. optimierte Beladung des Laderaumes auf dem Ausliefer-Transportfahrzeug 69 berechnet wird. Ein Kundenauftrag eines Handelsunternehmens umfasst üblicherweise Bestellungen aus mehreren Verkaufsstellen (Filialen), sodass bei der Optimierung der Beladung des Laderaumes die Versandeinheiten 2 in der richtigen Auslieferreihenfolge geladen werden müssen. Die Versandeinheiten 2, die als letztes ausgeliefert werden, müssen in der tiefsten Ladeposition im Laderaum geladen werden, während die Versandeinheiten 2, die als erstes ausgeliefert werden, in der vordersten Ladeposition im Laderaum geladen werden müssen.

Vor diesem Hintergrund wird vom Lagerverwaltungsrechner ein elektronischer Versandeinheiten-Zuweisungsplan für die Verteilung der Versandeinheiten 2 auf die Abstellplätze 12 der Ausgangspufferzonen 10 erstellt und der Konsolidierungsperson 66 an der Ein- und/oder Ausgabevorrichtung 68, beispielsweise auf einem Bildschirm angezeigt, welche Versandeinheit 2 auf welchem Abstellplatz 12 in welcher Ausgangspufferzone 10 abgestellt werden muss. Die Konsolidierungsperson 66 stellt die Versandeinheiten 2 eine nach der anderen in der festgelegten Auslieferreihenfolge auf den Stellplätzen 12 ab.

Wurde eine Versandeinheit 2 auf einem Abstellplatz 12 in einer der Ausgangspufferzonen 10 abgestellt, wird dies durch die Konsolidierungsperson 66 bestätigt, beispielsweise durch Eingabe eines Bestätigungsbefehles an der Ein- und/oder Ausgabevorrichtung 68. Die Kundenauftragsliste wird Schritt für Schritt abgearbeitet. Die bereits erledigten Schritte, daher Abgabe einer Versandeinheit 2 und Platzierung auf dem Stellplatz 12, werden aus der Kundenauftragsliste gelöscht. Wurden alle Versandeinheiten 2 zu einem Kundenauftrag in der Auslieferreihenfolge abgestellt, wird der erledigte Kundenauftrag vom Lagerverwaltungsrechner zum Beladen eines Ausliefer-Transportfahrzeuges 69 frei gegeben.

Der Lagerverwaltungsrechner kann ferner ein Fahrwegplanungsmodul umfassen, mittels welchem auf Basis eines Kundenauftrags ein logistischer Ablaufplan zum Abholen der Versandeinheiten 2 von den Abgabestationen 48 errechnet und der Konsolidierungsperson 66 an der (mobilen) Ein- und/oder Ausgabevorrichtung 68 ausgegeben wird. In einer bevorzugten Ausführung wird der Konsolidierungsperson 66 sowohl der Versandeinheiten-Zuweisungsplan als auch der logistische Ablaufplan ausgegeben.

Das Fahrwegplanungsmodul optimiert die von der Konsolidierungsperson 66 zurückzulegenden Laufwege. Die Konsolidierungsperson 66 wird in einer bevorzugten Ausführung zu jener Abgabestation 48 geführt, welche zu dem vom Versandeinheiten-Zuweisungsplan festgelegten Abstellplatz 12 am nächsten liegt. Dadurch können von der Konsolidierungsperson 66 die Kundenaufträge besonders effizient abgearbeitet werden und die Beladung der Ausliefer-Transportfahrzeug 69 innerhalb kürzester Zeit erfolgen. Durch den Ablaufplan ist es nunmehr möglich, dass im Konsolidierungsbereich 9 nur wenige Konsolidierungspersonen 66 arbeiten, deren Laufwege zwischen den Abgabestationen 48 und Stellplätzen 12 vom Lagerverwaltungsrechner koordiniert werden.

In einer anderen Ausführung muss die Konsolidierungsperson 66 stets von derselben Abgabestation 48 die bereitgestellten Versandeinheiten 2 abholen.

Anderseits ist es auch möglich, dass der Konsolidierungsperson 66 an der Ein- und/oder Ausgabevorrichtung 68 die Kundenauftragsliste angezeigt wird und aus ihr einen Kundenauftrag wählt. Anhand des ausgewählten Kundenauftrags wird vom Fahrwegplanungsmodul die Abgabestation 48 berechnet und der Konsolidierungsperson 66 an der Ein- und/oder Ausgabevorrichtung 68 angezeigt, welche Abgabestation 48 von ihr zu bedienen ist.

Nachdem die Versandeinheiten 2 nacheinander auf den Abstellplätzen 12 innerhalb einer Ausgangspufferzone 10 zu einem Kundenauftrag in der Auslieferungsreihenfolge abgestellt wurden oder noch werden, können die Versandeinheiten 2 in dieser Reihenfolge auf das Ausliefer-Transportfahrzeug 69 geladen werden. Wurde das Ausliefer-Transportfahrzeug 69 mit all den zu einem Kundenauftrag gehörenden Versandeinheiten 2 beladen, werden vom Ausliefer-Transportfahrzeug 69 die Verkaufsstellen in der vom Lagerverwaltungsrechner berechneten Route angefahren.

Wie in Fig. 1b eingetragen, ist im Konsolidierungsbereich nahe jeder Auslagerförderbahn 47 eine Etikettiervorrichtung 70 angeordnet, mittels welcher ein Datenträger hergestellt wird.
Der Datenträger ist in einer bevorzugten Ausführung durch eine Versandetikette, insbesondere eine Barcodeetikette gebildet und enthält insbesondere Daten über die Menge Packeinheiten 4 auf dem Ladehilfsmittel 3, Daten über den Artikel, wie die eindeutige Artikelnummer, Ablaufdatum, Herstellerfirma, Verpackungsgröße etc., die zu beliefernde Verkaufsstelle, und/oder gegebenenfalls die vom Lagerverwaltungsrechner berechnete Route und dgl.

Diese Daten werden vor der Entnahme einer Versandeinheit 2 von einem Lesegerät 65 an der Abgabestation 48 ausgelesen und der Konsolidierungsperson 66 an der Ein- und/oder Ausgabevorrichtung 68 beispielsweise die Artikel/Packeinheiten 4 der zu entnehmenden Versandeinheit und/oder Verkaufsstelle etc. angezeigt.

Im nachfolgenden wird das erfindungsgemäße Verfahren zum Konsolidieren von Versandeinheiten 2 im Lagersystem 1 beschrieben:
Die Artikel, beispielsweise Packeinheiten (Collis), werden auf Ladehilfsmittel 3, beispielsweise eine Palette, mit Lieferanten-Transportfahrzeugen 14 (LKW) am Wareneingang 5 zu einer der Anlieferungsstationen 13 angeliefert. Bei diesen Artikeln handelt es sich ausschließlich um Schnelldreher, so genannte A-Artikel, also Artikel, die eine hohe Umschlagshäufigkeit besitzen, d.h. pro Zeiteinheit werden große Mengen umgeschlagen. Die Packeinheiten 4 werden im Zwischenlager 6 für zwei bis fünf Tage zwischengelagert.

Dem Lenker des Lieferanten-Transportfahrzeuges 14 wird an der Ein- und/oder Ausgabevorrichtung 18 angezeigt, an welcher freien Anlieferungsstation 13 er mit dem Lieferanten-Transportfahrzeug 14 andocken muss. Mit der Anlieferung der Artikel werden der Lieferumfang, das Artikelsortiment vom Lagerverwaltungsrechner elektronisch erfasst. Sobald diese Daten vom Lagerverwaltungsrechner erfasst wurden, kann die Zuteilung des Lieferanten-Transportfahrzeuges 14 zu einer der Anlieferungsstationen 13 erfolgen.

Der Lagerverwaltungsrechner umfasst unter anderem ein Versandeinheiten-Zuteilungsmodul, mittels welchem eine Lagerkennzahl von jedem Lagerregal 23, wie der Lagerfüllgrad, Lagerdurchsatz und/oder Lagerbestand an Versandeinheiten, und/oder eine Leistungskennzahl in einem Förderabschnitt des Versandeinheiten-Verteilsystem, insbesondere der automatisierten Fördertechnik, wie die Auslastung an den Aufgabestationen 17, der Einlagerförderbahnen 45, der Regalförderfahrzeuge 27 und/oder der Förderumlaufbahn 46 ermittelt.

Der Lagerbestand definiert die Menge der in einem Lagerregal 23 eingelagerten unterschiedlichen A-Artikel (A1-Artikel, A2-Artikel, A3-Artikel etc.). Der Lagerdurchsatz ist durch die Anzahl der Ein- und Auslagerungen der Versandeinheiten 2 in einen Lagerkanal 25 bzw. aus einem Lagerkanal 25 definiert. Der Lagerfüllgrad gibt das Verhältnis zwischen vorhandenen Lagerplätzen und belegten Lagerplätzen an.

Die Auslastung der automatisierten Fördertechnik kann über den Durchsatz oder die Durchlaufzeit der Versandeinheiten 2 an den Aufgabestationen 17, der Einlagerförderbahnen 45 und/oder der Anzahl der Ein- und Auslagervorgänge ermittelt werden. Zur Erfassung des Durchsatzes, der Durchlaufzeit und/oder der Anzahl der Ein- und Auslagervorgänge werden beispielsweise Sensoren verwendet und/oder vom Lagerverwaltungsrechner berechnet.

Der Istwert der Lagerkennzahl der Lagerregale 23 und/oder Leistungskennzahl wird mit einem Sollwert der Lagerkennzahl der Lagerregale 23 und/oder der Leistungskennzahl in einem Vergleichsmodul des Lagerverwaltungsrechners verglichen. Der Sollwert ist durch eine Untergrenze und Obergrenze definiert. Unterschreitet der Istwert der Lagerkennzahl in einem der Lagermodule 19 bis 22 und/oder Leistungskennzahl in einem Förderabschnitt des Versandeinheiten-Verteilsystems, insbesondere der automatisierten Fördertechnik, den Sollwert, wird das Lieferanten-Transportfahrzeug 14 zu der diesem Lagermodul 19 bis 22 zugeordneten Anlieferungsstation 13 gelotst. Nähert sich der Istwert hingegen dem Sollwert an oder erreicht dieser den Sollwert, bedeutet dies, dass in einem Lagermodul 19 bis 22 der maximale Lagerbestand, Lagerdurchsatz, Lagerfüllgrad und/oder in einem Förderabschnitt der automatisierten Fördertechnik die maximale Auslastung erreicht ist und das Lieferanten-Transportfahrzeug 14 zu einer Anlieferungsstation 13 gelotst werden muss, welche einem Lagermodul 19 bis 22 zugeordnet ist, bei welchem der Istwert den Sollwert unterschreitet. Der Istwert der Lagerkennzahl und/oder die Leistungskennzahl wird über Überwachungsorgane, insbesondere Sensoren er-fasst und/oder vom Lagerverwaltungsrechner berechnet.

Wie in Fig. 1a ersichtlich, sind sechs Anlieferungsstationen 13 vier Lagermodule 19 bis 22 zugeordnet und werden bevorzugt zwei Lagermodule 19 bis 22 von drei Anlieferungsstationen 13 mit Versandeinheiten 2 versorgt. Dadurch muss der Lagerarbeiter 15 nur relativ kurze Wege zwischen einer Aufgabestation 17 und einer dem betreffenden Lagermodul 19 bis 22 zugeordneten Anlieferungsstation 13 zurücklegen.

Ist die Aufgabestation 17 jenes Lagermoduls 19 bis 22 durch Versandeinheiten 2 belegt, auf die neuerlich Versandeinheiten 2 abgesetzt werden sollen, die von der einem Lagermodul 19 bis 22 zugeordneten Anlieferungsstation 13 stammen, werden die Versandeinheiten 2 vorübergehend auf den Stellplätzen 11 der Eingangspufferzonen 8 zwischengelagert.

Wurde eine Versandeinheit 2 von der Aufgabestation 17 auf die Einlagerförderbahn 45 transportiert, kann auf die Aufgabestation 17 entweder eine Versandeinheit 2 aus einer Eingangspufferzone 8 oder wiederum von einer Anlieferungsstation 13 abgegeben werden.

### Einlagerung/Umlagerung von Versandeinheiten:

Damit die Anzahl der Auslagerförderbahnen 47 und Abgabestationen 48 so niedrig als möglich gehalten werden kann, ist es erfindungsgemäß vorgesehen, dass in jedem Lagerregal 23 im Wesentlichen das gleiche Artikelsortiment enthalten ist. Die Verteilung der Artikel (Packeinheiten 4) bzw. der diese enthaltenden Versandeinheiten 2 kann noch vor ihrer Einlagerung in das Zwischenlager 6 oder im Zwischenlager 6 erfolgen.

Bei der Verteilung der Versandeinheiten 2 vor ihrer Einlagerung in das Zwischenlager 6 werden die Laufwege der Lagerarbeiter 15 zwischen den Anlieferungs- und Aufgabestationen 13, 17 koordiniert.

Wird der Sollwert der Lagerkennzahl in einem der Lagerregale 23 in einem der Lagermodule 19 bis 22 der Sollwert unterschritten, beispielsweise ist der Lagerbestand der gepufferten A1-Artikel in diesem Lagerregal 23 zu gering und müssen A1-Artikel eingelagert werden, hat der Lagerarbeiter 15 an der diesem Lagermodul 19 bis 22 zugeordneten Aufgabestation 17 Versandeinheiten 2 nachzuliefern. Gleiches gilt wenn die Leistungskennzahl des Versandeinheiten-Verteilsystems, insbesondere der automatisierten Fördertechnik, den Sollwert unterschreitet, beispielsweise wenn der Durchsatz an der Aufgabestation 17 oder die Auslastung des Regalförderfahrzeug 27 in einem der Lagermodule 19 bis 22 zu gering wird, muss der Lagerarbeiter 15 die Versandeinheiten 2 der einem Lagermodul 19 bis 22 zugeordneten Aufgabestation 17 zustellen.

Es kann unter Umständen auch vorkommen, dass die (gegebenenfalls sortenreine) Artikel enthaltenden Versandeinheiten 2 in ein Lagerregal 23 des zweiten Lagermoduls 20 eingelagert werden müssten, aber die Leistungskennzahl in einem Förderabschnitt des Versandeinheiten-Verteilsystems, insbesondere der automatisierten Fördertechnik, des zweiten Lagermoduls 20 den Sollwert erreicht hat und deshalb an dieser Aufgabestation 17 die Versandeinheiten 2 nicht aufgegeben werden können. Wenn dies der Fall ist, kann der Lagerarbeiter 15 die Versandeinheiten 2 nicht auf die Aufgabestation 17 des zweiten Lagermoduls 20, sondern auf die Aufgabestation 17 des dem zweiten Lagermodul 20 unmittelbar benachbarten ersten Lagermoduls 19 vorübergehend zustellen. Die Versandeinheiten 2 werden vorerst über die Einlagerförderbahn 45 des ersten Lagermoduls 19 bis zu der Umsetzfördervorrichtung 51 transportiert, ehe sie dann über die Querförderbahn 52 auf die Umsetzfördervorrichtung 51 und die Einlagerförderbahn 45 des zweiten Lagermoduls 20 transportiert werden, sofern die Leistungskennzahl den Sollwert der automatisierten Fördertechnik im zweiten Lagermodul 20 unterschreitet, daher die Einlagerförderbahn 45 im zweiten Lagermodul 20 zur Aufnahme von Versandeinheiten 2 bereit ist.

Die Versandeinheiten 2 werden über die Einlagerförderbahnen 45 bis auf eine Verteilförderbahn 55 und von dieser auf eine Umlagerförderbahn 56 zu der Bereitstellungsstation 49 transportiert, ehe sie dann von einem Regalförderfahrzeug 27 im jeweiligen Lagermodul 19 bis 22 abgeholt werden. In der Bereitstellungsstation 49 wird nach der Positionierung der Plattform 30 gegenüber der Umlagerförderbahn 56 entweder eine einzelne Versandeinheit 2 mit der Formatabmessung 800 mm x 1200 mm oder gleichzeitig zwei Versandeinheiten 2 mit den Formatabmessungen 800 mm x 600 mm von der Umlagerförderbahn 56 auf die Förderbahn 34 übergeben. Wurde(n) die Versandeinheit(en) 2 von der Lastaufnahmevorrichtung übernommen, verfährt das Regalförderfahrzeug 27 entlang der Gasse 24 und wird die Plattform 30 vor einem nach dem chaotischen Lagerungsprinzip vom Lagerverwaltungsrechner ermittelten Lagerkanal 26 jenes Lagerregals 23 positioniert, an welchem der Sollwert der Lagerkennzahl unterschritten wird, worauf entweder eine einzelne Versandeinheit 2 größerer Formatabmessung oder gleichzeitig zwei Versandeinheiten 2 kleinerer Formatabmessung über die Ein- und Auslagerungsvorrichtung 32 in den Lagerkanal 26 eingelagert wird.

Innerhalb eines Lagerkanals 26 werden die Artikel/Versandeinheiten 2 vorzugsweise sortenrein gepuffert, daher ist in einem Lagerkanal 26 nur ein Artikeltyp eingelagert.

Bei der Verteilung der Versandeinheiten 2 im Zwischenlager 6 werden diese zur gegenseitigen Angleichung der Lagerkennzahlen in den Lagerregalen 23 über die Förderumlautbahn 46 auf die Lagermodule 19 bis 22 aufgeteilt. Wird beispielsweise im zweiten Lagermodul 20 in einem der beiden Lagerregale 23 der Sollwert der Lagerkennzahl unterschritten, können die im zweiten Lagermodul 20 fehlenden Artikel/Packeinheiten 4 von der Einlagerförderbahn 45 beispielsweise des ersten Lagermoduls 20 über die Verteil- und Verbindungsförderbahnen 55, 58 auf die Verteilförderbahn 55 im zweiten Lagermodul 20 gefördert werden, von wo sie auf die Umlagerförderbahn 56 zur Bereitstellungsstation 49 im zweiten Lagermodul 20 weitertransportiert werden. Sollen Versandeinheiten 2 mit den Artikel/Packeinheiten 4 beispielsweise vom ersten Lagermodul 19 bis zum dritten Lagermodul 21 gefördert werden, wird das Regalförderfahrzeug 27 im zweiten Lagermodul 20 zwischen die Umlagerförderbahnen 56 bewegt und die Plattform 30 soweit angehoben, dass die Förderebene der Umlagerförderbahnen 56 und die Förderebene der Fördervorrichtung 31 fluchten. Sodann werden die Versandeinheiten 2 von der linken Umlagerförderbahn 56 über die Fördervorrichtung 31 auf die rechte Umlagerförderbahn 56 im zweiten Lagermodul 20 und von letzterer auf die Zulieferförderbahn 54 und danach auf die linke Umlagerförderbahn 56 zur Bereitstellungsstation 49 im dritten Lagermodul 21 gefördert.

Andererseits ist es auch möglich, dass bereits in die Lagerkanäle 26 eingelagerte Versandeinheiten 2 über die Ein- und Auslagerungsvorrichtung 32 ausgelagert und vom Regalförderfahrzeug 27 in die Bereitstellungsstation 49 gefördert und an dieser auf eine Umlagerförderbahn 56, 57 abgegeben und danach über den ersten Verteilabschnitt von einem Lagermodul 19 bis 22 zum anderen Lagermodul 19 bis 22 gefördert werden.

Die Umlagerung von Versandeinheiten 2 zwischen den Lagerregalen 23 der Lagermodule 19 bis 22 ist von Vorteil, wenn über einen Zeitraum, beispielsweise einen Tag, eine so genannte "Schräglast" in der Verteilung der unterschiedlichen Artikel/Packeinheiten 4 entsteht, beispielsweise aus dem dritten Lagermodul 21 eine überdurchschnittlich hohe Anzahl an Versandeinheiten 2 mit A1-Artikel angefordert wurde. Tritt eine solche "Schräglast" auf, können Versandeinheiten 2 aus einem oder mehreren der anderen Lagermodule 19, 20, 22 ausgelagert und über den ersten Verteilabschnitt zum dritten Lagermodul 21 gefördert und über das Regalförderfahrzeug 27 eingelagert werden. Die Umlagerung von Versandeinheiten 2 erfolgt in "auftragsarmen" Zeiten, wo die Auslastung der Regalförderfahrzeuge 27 und der Förderumlautbahn 46 niedrig ist und der Warenfluss während der Hauptzeiten nicht beeinträchtigt wird. Durch die Umlagerung wird eine gegenseitige Angleichung der Lagerkennzahlen, insbesondere der Lagerbestände, in den Lagerregalen 23 der verschiedenen Lagermodule 19 bis 22 erreicht. Dadurch wird eine Leistungsoptimierung der automatisierten Fördertechnik, insbesondere der Regalförderfahrzeuge 27, in den Lagermodulen 19 bis 22 erreicht, insofern, als dass in allen Lagermodulen 19 bis 22 in "auftragsstarken" Zeiten annähernd der gleiche Lagerbestand von Artikeln vorliegt und dieselbe Menge an Artikel nachgeliefert werden muss.

Andererseits kann die Förderumlaufbahn 46 bzw. der erste Verteilerabschnitt auch dafür eingesetzt werden, dass eine "Verdichtung" der Versandeinheiten 2 in den Lagerkanälen 26 erfolgt. Mit anderen Worten, wird beispielsweise eine Versandeinheit 2 großer Formatabmessung aus einem Lagerkanal 26 beispielsweise im zweiten Lagermodul 20 vom Regalförderfahrzeug 27 ausgelagert und zwischen die Umlagerförderbahnen 56 in die Bereitstellungsstation 49 transportiert und über den ersten Verteilabschnitt in die Bereitstellungsstation 49 beispielsweise im vierten Lagermodul 22 gefördert und über das Regalförderfahrzeug 27 in einen Lagerkanal 26 eingelagert, in welchem nur eine Versandeinheit 2 großer Formatabmessung eingelagert ist und eine zweite Versandeinheit 2 großer Formatabmessung aufnehmen kann. Natürlich kann auch innerhalb eines Lagerregals 23 oder Lagermoduls 19 bis 22 die "Verdichtung" durchgeführt werden. Dadurch können nur zum Teil aufgefüllte Lagerkanäle 26 vollständig entleert und nur zum Teil aufgefüllte Lagerkanäle 26 vollständig aufgefüllt werden. Dies ist von Vorteil, da zum Zeitpunkt der Auslagerung mit der Ein- und Auslagerungsvorrichtung 32 die maximale Anzahl an Versandeinheiten 2 aus einem Lagerkanal 27 entnommen, über das Regalförderfahrzeug 27 in die Bereitstellungsstation 49 transportiert und über die Auslagerförderbahnen 47 an die Abgabestation 48 gefördert werden können, daher die Durchsatzleistung im Zwischenlager in "auftragsstarken" Zeiten besonders hoch gehalten werden kann.

### Auslagerung von Versandeinheiten:

Wird ein Kundenauftrag abgearbeitet, werden die zu diesem Kundenauftrag benötigten Versandeinheiten 2 aus einem oder mehreren Lagerkanälen 26 ausgelagert und an zumindest einer Abgabestation 48 bereitgestellt. Der Kundenauftrag enthält eine oder mehrere Versandeinheiten 2. Werden mehrere Versandeinheiten 2 benötigt, können diese entweder aus nur einem Lagermodul 19 bis 22 oder bevorzugt simultan aus mehreren Lagermodulen 19 bis 22 ausgelagert und an nur einer Abgabestation 48 hintereinander oder an mehreren Abgabestationen 48 parallel (aber nicht unbedingt gleichzeitig) bereitgestellt werden.

Werden die Versandeinheiten 2 aus nur einem Lagermodul 19 bis 22 bezogen, werden diese nacheinander aus den Lagerkanälen 26 über die Lastaufnahmevorrichtung ausgelagert und vom Regalförderfahrzeug 27 in die Bereitstellungsstation 49 und in dieser von der Plattform 30 auf eine Umlagerförderbahn 56 übergeben und danach über die Zulieferförderbahn 54 auf die Auslagerförderbahn 47 bis zur Abgabestation 48 gefördert.

Werden die Versandeinheiten 2 aus unterschiedlichen Lagermodulen 19 bis 22 bezogen, beispielsweise aus dem ersten Lagermodul 19 und zweiten Lagermodul 20, so wird im ersten Lagermodul 19 zumindest eine Versandeinheit 2 ausgelagert und bis zur Abgabestation 48 gefördert, wie oben beschrieben, und parallel im zweiten Lagermodul 20 zumindest eine Versandeinheit 2 über die Lastaufnahmevorrichtung aus dem Lagerkanal 26 ausgelagert und über das Regalförderfahrzeug 27 in die Bereitstellungsstation 49 und danach von der Umlagerförderbahn 56 über die Zulieferförderbahn 54 auf die zweite Auslagerförderbahn 47 gefördert. Diese Versandeinheiten 2 können entweder über die zweite Auslagerförderbahn 47 bis zur zweiten Abgabestation 48 transportiert werden oder aber über den zweiten Verteilabschnitt zur ersten Auslagerförderbahn 47 gefördert, an diese übergeben und anschließend an der ersten Abgabestation 48 bereitgestellt werden. Auf einer Abgabestation 48 können somit verschiedene Versandeinheiten 2 bzw. verschiedene Artikel/Packeinheiten 4, daher beispielsweise auf der ersten Abgabestation 48 A1-Artikel, A2-Artikel, A3-Artikel etc., aus demselben Lagermodul 19 bis 22 oder aus unterschiedlichen Lagermodulen 19 bis 22 bereitgestellt werden.

Versandeinheiten 2 mit Ladehilfsmittel 3 kleinerer Formatabmessung werden bevorzugt gemäß einem Kundenauftrag aus einem oder mehreren Lagerkanälen 26 ausgelagert und zu einer Versandeinheiten-Gruppe zusammengefasst (Vorkonsolidierung) und danach zu einer Bereitstellungsstation 49 gefördert. Beispielsweise werden auf der Lastaufnahmevorrichtung zwei Versandeinheiten 2 aufgenommen. An der Bereitstellungsstation angekommen, wird die Versandeinheiten-Gruppe entweder zur Auslagerung über eine Puffer- und Auslagerförderbahn 47, 59 zu einer Abgabestation 48 oder zur Umlagerung über den ersten Versandeinheiten-Verteilabschnitt zu einer Bereitstellungsstation 49 in einem anderen Lagermodul 19 bis 22 gefördert.

Liegt ein "Eilauftrag" vor, wird das Regalförderfahrzeug 27 zu einen Lagerkanal 26 verfahren, der die Versandeinheit 2 für den "Eilauftrag" enthält, und die Versandeinheit 2 höherer Priorität mittels der Ein- und Auslagerungsvorrichtung 32 aus dem Lagerkanal 26 entnommen und über das Regalförderfahrzeug 27 zur Übernahmestation 50 zwischen die Umlagerförderderbahnen 62, 63, 64 im zweiten Verteilabschnitt gefördert. Dort angekommen, wird diese Versandeinheit 2 auf die Umlagerförderbahn 62 übergeben und von dieser über die Einschleusförderbahn 61 auf die Auslagerförderbahn 47 transportiert.

Während auf den Auslagerförderbahnen 47 Versandeinheiten 2 gestaut werden, kann eine Versandeinheit 2 höherer Priorität über das Regalförderfahrzeug 27 an die Übernahmestation 50 gefördert und auf die Umlagerförderbahn 62, 64 übergeben und danach über die Einschleusförderbahn 61 in den Förderfluss - gemäß Pfeil 60 - der Versandeinheiten 2 niedrigerer Priorität auf der Auslagerförderbahn 47 eingeschleust werden.

Während dem Einschleusvorgang werden die Versandeinheiten 2 auf der Auslagerförderbahn 47 zurückgehalten, solange, bis die wenigstens eine Versandeinheit 2 entsprechend dem "Eilauftrag" von der Einschleusförderbahn 61 auf die Auslagerförderbahn 47 gefördert wurde. Erst danach werden die Versandeinheiten 2 auf der Auslagerförderbahn 47 von einem Stauplatz zum anderen Stauplatz in Richtung zur Abgabestation 48 gefördert.

Die auf den Abgabestationen 48 bereitgestellten Versandeinheiten 2 werden danach in oben beschriebener Weise von der Konsolidierungsperson 66 in den Ausgangspufferzonen 10 in der Auslieferreihenfolge zusammengestellt (Endkonsolidierung), ehe sie im Warenausgang 7 auf das, an eine der Auslieferungsstationen 71 angedockte Ausliefer-Transportfahrzeug 69 geladen werden.

Abschließend sei noch darauf hingewiesen, dass aus Gründen der besseren Übersicht nur in einigen Lagerregalen 23 und vereinzelt die Versandeinheiten 2 eingetragen wurden. Des Weiteren ist es auch möglich, dass die Konsolidierung nicht durch eine Konsolidierungsperson 66 manuell, sondern durch eine Fördertechnik, wie Roboter, Förderbahnen, Pufferbahnen etc. automatisiert erfolgt und der Ausliefer-Transportwagen 69 automatisch beladen wird.

Der Ordnung halber sei abschließend darauf hingewiesen, dass zum besseren Verständnis des Aufbaus des Lagersystems 1 diese bzw. deren Bestandteile teilweise unmaßstäblich und/oder vergrößert und/oder verkleinert dargestellt wurden.

### Bezugszeichenaufstellung

- 1: Lagersystem
- 2: Versandeinheit
- 3: Ladehilfsmittel
- 4: Packeinheit
- 5: Wareneingang

- 6: Zwischenlager
- 7: Warenausgang
- 8: Eingangspufferzone
- 9: Konsolidierungsbereich
- 10: Ausgangspufferzone

- 11: Stellplatz
- 12: Stellplatz
- 13: Anlieferungsstation
- 14: Lieferanten-Transportfahrzeug
- 15: Lagerarbeiter

- 16: Verteilerwagen
- 17: Aufgabestation
- 18: Ein- und/oder Ausgabevorrichtung
- 19: Lagermodul
- 20: Lagermodul

- 21: Lagermodul
- 22: Lagermodul
- 23: Lagerregal
- 24: Gasse
- 25: Lagerebene

- 26: Lagerkanal
- 27: Regalförderfahrzeug
- 28: Schienensystem
- 29: Schienensystem
- 30: Plattform

- 31: Fördervorrichtung
- 32: Ein- und Auslagerungsvorrichtung
- 33: Hubtisch
- 34: Förderbahn
- 35: Ein- und/oder Ausgabevorrichtung

- 36:
- 37: Prüfstation
- 38: Sensorik
- 39: Sensorik
- 40: Sensorik

- 41:
- 42:
- 43: Fördervorrichtung
- 44: Fördervorrichtung
- 45: Einlagerförderbahn

- 46: Förderumlaufbahn
- 47: Auslagerförderbahn
- 48: Abgabestation
- 49: Bereitstellungsstation
- 50: Übernahmestation

- 51: Umsetzfördervorrichtung
- 52: Querförderbahn
- 53: Förderorgan
- 54: Zulieferförderbahn
- 55: Verteilförderbahn

- 56: Umlagerförderbahn
- 57: Umlagerförderbahn
- 58: Verbindungsförderbahn
- 59: Pufferförderbahn
- 60: Förderfluss

- 61: Einschleusförderbahn
- 62: Umlagerförderbahn
- 63: Umlagerförderbahn
- 64: Umlagerförderbahn
- 65: Lesegerät

- 66: Konsolidierungsperson
- 67: Gabelstapler
- 68: Ein- und/oder Ausgabevorrichtung
- 69: Ausliefer-Transportfahrzeug
- 70: Etikettiervorrichtung
- 71: Auslieferungsstation

## Patentansprüche

1. Verfahren zum Konsolidieren von Ladehilfsmitteln (3), insbesondere Paletten, mit darauf gestapelten Packeinheiten (4) hoher Umschlaghäufigkeit (Schnelldreher) in einem Lagersystem (1), welches ein Zwischenlager (6) mit einer Aufgabestation (17), Abgabestationen (48) und einer diese verbindenden automatisierten Fördertechnik aufweist, bei dem die Ladehilfsmitteln (3) mit den Packeinheiten (4) als Versandeinheiten (2) an Anlieferungsstationen (13) im Wareneingang (5) übernommen, im Zwischenlager (6) in Lagerregale (23) mit übereinander liegenden Lagerebenen (25) gepuffert und aus dem Zwischenlager (6) zu das Lagersystem (1) aufweisenden Abgabestationen (48) zur nachfolgenden Konsolidierung gefördert, sodann in einem Konsolidierungsbereich (9) in einer für den Transport auf einem Ausliefer-Transportfahrzeug (69), insbesondere LKW, durch einen Kundenauftrag festgelegten Auslieferreihenfolge zusammengestellt werden, in welcher die Versandeinheiten (2) an Auslieferungsstationen (71) im Warenausgang (7) auf das Ausliefer-Transportfahrzeug (69) geladen werden, **dadurch gekennzeichnet, dass** von einem Lagerverwaltungsrechner eine Lagerkennzahl von jedem Lagerregal (23), wie ein Lagerfüllgrad und/oder Lagerdurchsatz und/oder Lagerbestand an Versandeinheiten (2), ermittelt wird und die Versandeinheiten (2) zur gegenseitigen Angleichung der Lagerkennzahlen für die Lagerregale (23) über ein Versandeinheiten-Verteilsystem im Zwischenlager (6) auf die Lagerregale (23) verteilt werden, wobei das Versandeinheiten-Verteilsystem in Förderabschnitten die Aufgabestation (17), die Abgabestation (48) und die automatisierte Fördertechnik zumindest mit einer Förderumlaufbahn (46) und einem Regalförderfahrzeug (27) aufweist, und wobei die Versandeinheiten (2) über die Förderumlaufbahn (46) zwischen den Lagerregalen (23) gefördert und über das Regalförderfahrzeug (27) in eines der Lagerregale (23) umgelagert werden, wenn die Lagerkennzahl in einem der Lagerregale (23) und/oder die Leistungskennzahl des Versandeinheiten-Verteilsystems, wie die Auslastung des Versandeinheiten-Verteilsystems in einem seiner Förderabschnitte einen Sollwert unterschreitet.

2. Verfahren nach Anspruch 1, **dadurch gekennzeichnet, dass** das Lagerregal (23) in jeder Lagerebene (25) mehrere nebeneinander angeordnete Lagerkanäle (26) aufweist und die Versandeinheiten (2) innerhalb eines Lagerkanals (26) sortenrein gepuffert werden.

3. Verfahren nach Anspruch 1, **dadurch gekennzeichnet, dass** die Versandeinheiten (2) nach dem chaotischen Lagerungsprinzip in die Lagerkanäle (26) der Lagerregale (23) eingelagert werden.

4. Verfahren nach Anspruch 1, **dadurch gekennzeichnet, dass** die Versandeinheiten (2) von der Anlieferungsstation (13) zu wenigstens einer von mehreren Aufgabestationen (17) des Zwischenlagers (6) transportiert werden, wenn die Lagerkennzahl in einem der Lagerregale (23) und/oder die Leistungskennzahl des Versandeinheiten-Verteilsystems in einem seiner Förderabschnitte einen Sollwert unterschreitet.

5. Verfahren nach Anspruch 1, **dadurch gekennzeichnet, dass** vom Lagerverwaltungsrechner eine Lagerkennzahl von jedem Lagerregal (23), wie der Lagerfüllgrad und/oder Lagerdurchsatz und/oder Lagerbestand an Versandeinheiten (2), und/oder eine Leistungskennzahl des Versandeinheiten-Verteilsystems, wie die Auslastung des Versandeinheiten-Verteilsystems in einem seiner Förderabschnitte ermittelt und am Wareneingang (5) einem Lieferanten-Transportfahrzeug (14) eine von mehreren Anlieferungsstationen (13) zugewiesen wird, wenn die Lagerkennzahl in einem der Lagerregale (23) und/oder die Leistungskennzahl des Versandeinheiten-Verteilsystems, wie die Auslastung des Versandeinheiten-Verteilsystems in einem seiner Förderabschnitte einen Sollwert unterschreitet.

6. Verfahren nach Anspruch 1, **dadurch gekennzeichnet, dass** die Versandeinheiten (2) in zwischen den Anlieferungsstationen (13) und dem Zwischenlager (6) vorgesehenen Eingangspufferzonen (8) zwischengelagert werden, wenn die Lagerkennzahl in einem der Lagerregale (23) und/oder die Leistungskennzahl des Versandeinheiten-Verteilsystems, wie die Auslastung des Versandeinheiten-Verteilsystems in einem seiner Förderabschnitte einen Sollwert erreicht.

7. Verfahren nach Anspruch 1, **dadurch gekennzeichnet, dass** vor der Pufferung der Versandeinheiten (2) in das Zwischenlager (6) an einer Prüfstation (37) die Qualität der Ladehilfsmittel (3), der Beladungszustand auf den Ladehilfsmitteln (3) und eine Codierung zur Identifizierung der Packeinheiten (4) auf dem Ladehilfsmittel (3) überprüft wird.

8. Verfahren nach Anspruch 1, **dadurch gekennzeichnet, dass** im Warenausgang (7) einer Konsolidierungsperson (66) vom Lagerverwaltungsrechner auf Grundlage der Kundenaufträge Abstellplätze (12) für die Versandeinheiten (2) in, den Auslieferungsstationen (71) zugeordneten Ausgangspufferzonen (10) und eine Auslieferreihenfolge ermittelt und an einer Ein- und/oder Ausgabevorrichtung (68) ausgegeben werden und dass die Konsolidierungsperson (66) anhand der den Versandeinheiten (2) zugewiesenen Abstellplätze (12) die Versandeinheiten (2) in der festgelegten Auslieferreihenfolge auf die Ausgangspufferzonen (10) verteilt, worauf die zu einem Kundenauftrag zusammengestellten Versandeinheiten (2) an den Auslieferungsstationen (71) auf das Ausliefer-Transportfahrzeug (69) geladen werden.

9. Verfahren nach Anspruch 1, **dadurch gekennzeichnet, dass** die Versandeinheiten (2) von der Aufgabestation (17) über eine Einlagerförderbahn (45) zu einer zwischen der Aufgabestation (17) und der Abgabestation (48) angeordneten Bereitstellungsstation (49) gefördert und von einer automatisierten Fördertechnik, insbesondere Regalförderfahrzeug (27), übernommen und in einen vom Lagerverwaltungsrechner festgelegten Lagerkanal (26) eingelagert werden.

10. Verfahren nach Anspruch 1, **dadurch gekennzeichnet, dass** die Versandeinheiten (2) aus einem Lagerkanal (26) ausgelagert und über eine automatisierte Fördertechnik, insbesondere Regalförderfahrzeug (27), zu einer zwischen der Aufgabestation (17) und der Abgabestation (48) angeordneten Bereitstellungsstation (49) und von dieser über eine Zulieferförderbahn (54) auf eine Auslager- und Pufferförderbahn (48, 59) zur Abgabestation (48) gefördert werden.

11. Verfahren nach einem der Ansprüche 1 bis 10, **dadurch gekennzeichnet, dass** das Versandeinheiten-Verteilsystem eine Lastaufnahmevorrichtung zum Ein- und Auslagern von unterschiedliche Formatabmessungen aufweisenden Ladehilfsmitteln (3) in die bzw. aus den Lagerkanäle(n) (26) umfasst, wobei die Versandeinheiten (2) mit den Ladehilfsmitteln (3) kleinerer Formatabmessung auf der Lastaufnahmevorrichtung gemeinsam als Versandeinheiten-Gruppe zu einer Bereitstellungsstation (49) gefördert werden.

12. Verfahren nach einem der Ansprüche 1 bis 11, **dadurch gekennzeichnet, dass** den Versandeinheiten (2) eine Priorität zugewiesen wird und von der automatisierten Fördertechnik, insbesondere Regalförderfahrzeug (27), eine Versandeinheit (2) höherer Priorität in den Förderfluss (60) der Versandeinheiten (2) niedrigerer Priorität nahe der Abgabestation (48) eingeschleust wird.

13. Lagersystem (1) zum Konsolidieren von Ladehilfsmitteln (3), insbesondere Paletten, mit darauf gestapelten Packeinheiten (4) hoher Umschlaghäufigkeit (Schnelldreher) gemäß dem Verfahren nach einem der Ansprüche 1 bis 12, das in einem Wareneingang (5) die Ladehilfsmitteln (3) mit den Packeinheiten (4) als Versandeinheiten (2) empfangende Anlieferungsstationen (13), ein Zwischenlager (6) zur Pufferung der Versandeinheiten (5) mit einer Aufgabestation (17), Abgabestationen (48) und einer diese verbindenden automatisierten Fördertechnik, einen Konsolidierungsbereich (9) zum Zusammenstellen der Versandeinheiten (2) in einer durch einen Kundenauftrag festgelegten Auslieferreihenfolge sowie einen Warenausgang (7) zum Beladen eines Ausliefer-Transportfahrzeuges (69) mit den Versandeinheiten (2) umfasst, wobei das Zwischenlager (6) mit Lagerregale (23) mit übereinander liegenden Lagerebenen (25) zur Pufferung der Versandeinheiten (2) und mit zwischen den Lagerregalen (23) liegenden Gassen (24) ausgebidet ist, **dadurch gekennzeichnet, dass** das Zwischenlager (6) einen Lagerverwaltungsrechner zur Ermittlung einer Lagerkennzahl von jedem Lagerregal (23), wie ein Lagerfüllgrad und/oder Lagerbestand an Versandeinheiten (2), und ein Versandeinheiten-Verteilsystem zur gegenseitigen Angleichung der Lagerkennzahlen zwischen den Lagerregalen (23) aufweist, wobei das Versandeinheiten-Verteilsystem in mehreren Förderabschnitten die Aufgabestation (17), Abgabestationen (48) und automatisierte Fördertechnik zumindest mit einer sich zwischen den Lagerregalen (23) erstreckenden Förderumlaufbahn (46) und mit einem Regalförderfahrzeug (27), welches in den Gassen (24) verfahrbar ist, aufweist, und dass die Versandeinheiten (2) zur nachfolgenden Konsolidierung über das Versandeinheiten-Verteilsystem zu den Abgabestationen (48) transportiert werden.

14. Lagersystem nach Anspruch 13, **dadurch gekennzeichnet, dass** das Versandeinheiten-Verteilsystem nahe der Abgabestation (48) eine Einschleusförderbahn (61) zur Übergabe von Versandeinheiten (2) höherer Priorität auf eine Auslager- und Pufferförderbahn (47, 59) umfasst.

## Claims

1. Method of consolidating loading aids (3), in particular pallets, with packing units (4) of a high turnaround rate (fast-moving goods) stacked on them in a storage system (1) comprising an interim storage (6) with a goods-in station (17), goods-out stations (48) and an automated conveyor system connecting them, whereby the loading aids (3) with the packing units (4) are taken in at inbound delivery stations (13) at the goods-in entrance (5), buffered in the interim storage (6) in storage racks (23) with storage levels (25) disposed one above the other and conveyed from the interim storage (6) to goods-out stations (48) incorporating the storage system (1) for subsequent consolidation, and then assembled in a consolidation area (9) ready for transportation on a delivery transport vehicle (69), in particular a heavy goods vehicle, in a fixed delivery sequence based on a customer order in which the shipping units (2) are loaded onto the delivery transport vehicle (69) at outbound delivery stations (71) at the goods-out exit (7), **characterised in that** a storage characteristic of every storage rack (23) is determined by a storage administration computer, such as a storage filling level and/or storage throughput and/or stock level of shipping units (2), and the shipping units (2) are distributed to the storage racks (23) via a shipping unit distribution system in the interim storage (6) in order to mutually adapt the storage characteristics for the storage racks (23), and the shipping unit distribution system incorporates the goods-in station (17), the goods-out station (48) and the automated conveyor system comprising at least a conveyor circulation track (46) and a rack-serving vehicle (27) in conveyor sections, and the shipping units (2) are conveyed between storage racks (23) via the conveyor circulation track (46) and transferred by the rack-serving vehicle (27) into one of the storage racks (23) if the storage characteristic in one of the storage racks (23) and/or the performance characteristic of the shipping unit distribution system in one of its conveyor sections, such as the loading rate of the shipping unit distribution system, falls below a desired value.

2. Method as claimed in claim 1, **characterised in that** the storage rack (23) in every storage level (25) has several storage passages (26) disposed adjacent to one another and the shipping units (2) are buffered in specific types inside a storage passage (26).

3. Method as claimed in claim 1, **characterised in that** the shipping units (2) are stored in the storage passages (26) of the storage racks (23) in accordance with the chaotic storage principle.

4. Method as claimed in claim 1, **characterised in that** the shipping units (2) are transported from the inbound delivery station (13) to at least one of several goods-in stations (17) of the interim storage (6) if the storage characteristic in one of the storage racks (23) and/or the performance characteristic of the shipping unit distribution system in one of its conveyor portions falls below a desired value.

5. Method as claimed in claim 1, **characterised in that** a storage characteristic of every storage rack (23), such as the storage filling level and/or storage throughput and/or stock level of shipping units (2), and/or a performance characteristic of the shipping unit distribution system, such as the loading rate of the shipping unit distribution system in one of its conveyor portions, is determined by the storage administration computer, and one of several inbound delivery stations (13) is assigned a delivery transport vehicle (14) at the goods-in entrance (5) if the storage characteristic in one of the storage racks (23) and/or the performance characteristic of the shipping unit distribution system, such as the loading rate of the shipping unit distribution system in one of its conveyor portions, falls below a desired value.

6. Method as claimed in claim 1, **characterised in that** the shipping units (2) are temporarily stored in inbound buffer zones (8) provided between the inbound delivery stations (13) and the interim storage (6) if the storage characteristic in one of the storage racks (23) and/or the performance characteristic of the shipping unit distribution system, such as the loading rate of the shipping unit distribution system in one of its conveyor portions, reaches a desired value.

7. Method as claimed in claim 1, **characterised in that**, prior to buffering the shipping units (2) in the interim storage (6), the quality of the loading aids (3), the loading status on the loading aids (3) and a code for identifying the packaging units (4) on the loading aid (3) are inspected at an inspection station (37).

8. Method as claimed in claim 1, **characterised in that** a consolidation person (66) at the goods-out exit (7) is informed of storage places (12) for the shipping units (2) in outbound buffer zones (10) assigned to the outbound delivery stations (71) and a delivery sequence is determined by the storage administration computer on the basis of the customer orders and output on an input and/or output device (68), and the consolidation person (66) distributes the shipping units (2) to the outbound buffer zones (10) in the set delivery sequence on the basis of the storage spaces (12) assigned to the shipping units (2), after which the shipping units (2) assembled for a customer order are loaded onto the delivery transport vehicle (69) at the outbound delivery stations (71).

9. Method as claimed in claim 1, **characterised in that** the shipping units (2) are conveyed from the goods-in station (17) via an inbound conveyor track (45) to a marshalling station (49) disposed between the goods-in station (17) and the goods-out station (48) and are picked up by an automated conveyor system, in particular a rack-serving vehicle (27), and stowed in a storage passage (26) set by the storage administration computer.

10. Method as claimed in claim 1, **characterised in that** the shipping units (2) are removed from a storage passage (26) and conveyed via an automated conveyor system, in particular a rack-serving vehicle (27), to a marshalling station (49) disposed between the goods-in station and the goods-out station (48) and from there via an inbound conveyor track (54) onto an outbound and buffer track (48, 59) to the goods-out station (48).

11. Method as claimed in one of claims 1 to 10, **characterised in that** the shipping unit distribution system comprises a load-handling device for stowing and removing loading aids (3) of different format dimensions in and from the storage passage(s) (26), and the shipping units (2) with the loading aids (3) of smaller format dimension are conveyed on the load-handling device together as a shipping unit group to a marshalling station (49).

12. Method as claimed in one of claims 1 to 11, **characterised in that** a priority is assigned to the shipping units (2) and a shipping unit (2) of higher priority is fed by the automated conveyor system, in particular the rack-serving vehicle (27) into the conveyor flow (60) of shipping units (2) of lower priority close to the goods-out station (48).

13. Storage system (1) for consolidating loading aids (3), in particular pallets, with packaging units (4) of a high turnaround rate (fast-moving goods) stacked on them based on the method as claimed in one of claims 1 to 12, comprising inbound delivery stations (13) receiving the loading aids (3) with the packaging units (4) at a goods-in entrance (5) as shipping units (2), an interim storage (6) for buffering the shipping units (2) comprising a goods-in station (17), goods-out stations (48) and an automated conveyor system connecting them, a consolidation area (9) for assembling the shipping units (2) in a delivery sequence set on the basis of a customer order as well as a goods-out exit (7) for loading a delivery transport vehicle (69) with the shipping units (2), and the interim storage (6) is provided in the form of storage racks (23) with storage levels (25) lying one above the other for buffering the shipping units (2) and with aisles (24) lying in between the storage racks (23), **characterised in that** the interim storage (6) has a storage administration computer for determining a storage characteristic of every storage rack (23), such as a storage filling level and/or stock level of shipping units (2), and a shipping unit distribution system for mutually adapting the storage characteristic between the storage racks (23), and the shipping unit distribution system incorporates the goods-in station (17), goods-out stations (48) and an automated conveyor system with at least one conveyor circulation track (46) extending between the storage racks (23) in several conveyor portions, and with a rack-serving vehicle (27) which can be displaced in the aisles (24), and the shipping units (2) are transported to the goods-out stations (48) via the shipping unit distribution system for subsequent consolidation.

14. Storage system as claimed in claim 13, **characterised in that** the shipping unit distribution system has a feed-in conveyor track (61) close to the goods-out station (48) for transferring shipping units (2) of higher priority to an outbound and buffer conveyor track (47, 59).

## Revendications

1. Procédé de consolidation de moyens auxiliaires de chargement (3), en particulier de palettes, avec des unités d'emballage (4) empilées sur celles-ci d'une fréquence de manutention élevée (dispositif de rotation rapide) dans un système de stockage (1), qui présente un dépôt intermédiaire (6) avec une station d'alimentation (17), des stations d'émission (48) et une technique de convoyage automatisée reliant celles-ci, où les moyens auxiliaires de chargement (3) sont pris en charge avec les unités d'emballage (4) comme unités d'expédition (2) à des stations de livraison (13) à l'entrée des marchandises (5), sont tamponnés dans le dépôt intermédiaire (6) dans des étagères de stockage (23) avec des plans de stockage superposés (25) et sont convoyés du dépôt intermédiaire (6) à des stations d'émission (48) présentant le système de stockage (1) en vue d'une consolidation suivante, sont réunis ensuite dans une zone de consolidation (9) selon une succession de livraisons déterminée pour le transport sur un véhicule de transport de livraison (69), en particulier sur un camion, par la commande d'un client, dans laquelle les unités d'expédition (2) sont chargées à des stations de livraison (71) dans la sortie des marchandises (7) sur le véhicule de transport de livraison (69), **caractérisé en ce qu'**est déterminé par un calculateur de gestion de stock un nombre caractéristique de stockage de chaque étagère de stockage (23), comme un degré de remplissage de stockage et/ou un débit de stockage et/ou un état de stockage à des unités d'expédition (2), et les unités d'expédition (2), pour une adaptation mutuelle des nombres caractéristiques de stockage pour les étagères de stockage (23), sont réparties par un système de répartition des unités d'expédition dans le dépôt intermédiaire (6) sur les étagères de stockage (23), où le système de répartition des unités d'expédition présente dans des sections de convoyage la station d'alimentation (17), la station d'émission (48) et la technique de convoyage automatisée au moins avec une voie de circulation de convoyage (46) et un véhicule de convoyage d'étagères (27), et où les unités d'expédition (2) sont convoyées par la voie de circulation de convoyage (46) entre les étagères de stockage (23) et sont transbordées par le véhicule de convoyage d'étagères (27) sur une des étagères de stockage (23) lorsque le nombre caractéristique de stockage dans chacune des étagères de stockage (23) et/ou le nombre caractéristique de puissance du système de répartition des unités d'expédition, comme la charge du système de répartition des unités d'expédition, est en dessous d'une valeur de consigne dans une de ses sections de convoyage.

2. Procédé selon la revendication 1, **caractérisé en ce que** l'étagère de stockage (23), dans chaque plan de stockage (25), présente plusieurs canaux de stockage juxtaposés (26), et les unités d'expédition (2) sont tamponnées à l'intérieur du canal de stockage (26) selon leur variété.

3. Procédé selon la revendication 1, **caractérisé en ce que** les unités d'expédition (2) sont stockées selon le principe de stockage chaotique dans les canaux de stockage (26) des étagères de stockage (23).

4. Procédé selon la revendication 1, **caractérisé en ce que** les unités d'expédition (2) sont transportées de la station de livraison (13) à au moins une de plusieurs stations d'alimentation (17) du dépôt intermédiaire (6) lorsque le nombre caractéristique de stockage dans une des étagères de stockage (23) et/ou le nombre caractéristique de puissance du système de répartition des unités d'expédition, dans une de ses sections de stockage, est en dessous d'une valeur de consigne.

5. Procédé selon la revendication 1, **caractérisé en ce qu'**est déterminé par le calculateur de gestion de stock un nombre caractéristique de stockage de chaque étagère de stockage (23), comme le degré de remplissage de stockage et/ou le débit de stockage et/ou l'état de stockage à des unités d'expédition (2), et/ou un nombre caractéristique de puissance du système de distribution des unités d'expédition, comme la charge du système de répartition des unités d'expédition dans une de ses sections de convoyage et, à l'entrée des marchandises (5) est attribuée à un véhicule de transport de livraison (14) une de plusieurs stations de livraison (13) lorsque le nombre caractéristique de stockage dans une des étagères de stockage (23) et/ou le nombre caractéristique de puissance du système de répartition des unités d'expédition, comme la charge du système de répartition des unités d'expédition, dans une de ses sections de convoyage, est en dessous d'une valeur de consigne.

6. Procédé selon la revendication 1, **caractérisé en ce que** les unités d'expédition (2) sont entreposées dans des zones tampon d'entrée (8) prévues entre les stations de livraison (13) et le dépôt intermédiaire (6) lorsque le nombre caractéristique de stockage dans une des étagères de stockage (23) et/ou le nombre caractéristique de puissance du système de répartition des unités d'expédition, comme la charge du système de distribution des unités d'expédition, dans une de ses sections de convoyage, atteint une valeur de consigne.

7. Procédé selon la revendication 1, **caractérisé en ce qu'**avant le tamponnage des unités d'expédition (2) dans le dépôt intermédiaire (6), il est vérifié à une station de vérification (37) la qualité des moyens auxiliaires de chargement (3), l'état de chargement sur les moyens auxiliaires de chargement (3) et un codage pour l'identification des unités d'emballage (4) sur le moyen auxiliaire de chargement (3).

8. Procédé selon la revendication 1, **caractérisé en ce qu'**est déterminé dans l'émission des marchandises (7) d'une personne de consolidation (66) par le calculateur de gestion de stock, sur la base des commandes des clients, des emplacements de dépôt (12) pour les unités d'expédition (2) dans des zones tampon de sortie (10) associées aux stations de livraison (71) ainsi qu'une succession de livraisons sont émis à un dispositif d'entrée et/ou d'émission (68), et **en ce que** la personne de consolidation (66), à l'aide des emplacements de dépôt (12) associés aux unités d'expédition (2), répartit les unités d'expédition (2) dans la succession de livraisons déterminée sur les zones tampon de sortie (10), suite à quoi les unités d'expédition (2) réunies en une commande de client sont chargées aux stations de livraison (71) sur le véhicule de transport de livraison (69).

9. Procédé selon la revendication 1, **caractérisé en ce que** les unités d'expédition (2) sont convoyées de la station d'alimentation (17) par une voie de convoyage de stockage (45) à une station de mise à disposition (49) disposée entre la station d'alimentation (17) et la station d'émission (48) et sont prises en charge par une technique de convoyage automatisée, en particulier un véhicule de convoyage d'étagères (27) et sont stockées dans un canal de stockage (26) déterminé par le calculateur de gestion de stockage.

10. Procédé selon la revendication 1, **caractérisé en ce que** les unités d'expédition (2) sont sorties d'un canal de stockage (26) et sont convoyées par une technique de convoyage automatisée, en particulier par un véhicule de convoyage d'étagères (27), à une station de mise à disposition (49) disposée entre la station d'alimentation (17) et la station d'émission (48) et de celle-ci par une voie de convoyage de livraison (54) à une voie de convoyage de transfert et de tampon (48, 59) à la station d'émission (48).

11. Procédé selon l'une des revendications 1 à 10, **caractérisé en ce que** le système de répartition des unités d'expédition comprend un dispositif de réception de charge pour déposer et sortir des moyens auxiliaires de chargement (3) présentant des dimensions de format différentes dans respectivement des canaux de stockage (26), où les unités d'expédition (2) sont convoyées avec les moyens auxiliaires de chargement (3) d'une dimension de format plus petite sur le dispositif de réception de charge conjointement comme groupe d'unités d'expédition à une station de mise à disposition (49).

12. Procédé selon l'une des revendications 1 à 11, **caractérisé en ce qu'**une priorité est attribuée aux unités d'expédition (2) et, par la technique de convoyage automatisée, en particulier le véhicule de convoyage d'étagères (27), une unité d'expédition (2) d'une priorité plus élevée est introduite dans le flux de convoyage (60) des unités d'expédition (2) d'une priorité moins élevée à proximité de la station d'émission (48).

13. Système de stockage (1) pour la consolidation de moyens auxiliaires de chargement (3), en particulier de palettes, avec des unités d'emballage (4) empilées sur celles-ci d'une fréquence de manutention élevée (dispositif de rotation rapide) selon le procédé selon l'une des revendications 1 à 12, qui comprend dans une entrée de marchandises (5) des stations de livraison (13) recevant les moyens auxiliaires de chargement (3) avec les unités d'emballage (4) comme unités d'expédition (2), un dépôt intermédiaire (6) pour tamponner les unités d'expédition (5) avec une station d'alimentation (17), une station d'émission (48) et une technique de convoyage automatisée reliant celles-ci, une zone de consolidation (9) pour réunir les unités d'expédition (2) selon une succession de livraisons déterminée par la commande d'un client ainsi qu'une sortie de marchandise (7) pour le chargement d'un véhicule de transport de livraison (69) avec les unités d'expédition (2), où le dépôt intermédiaire (6) est réalisé avec des étagères de stockage (23) avec des plans de stockage superposés (25) pour le tamponnage des unités d'expédition (2) et avec des ruelles (24) situées entre les étagères de stockage (23), **caractérisé en ce que** le dépôt intermédiaire (6) présente un calculateur de gestion de stock pour la détermination d'un nombre caractéristique de stockage de chaque étagère de stockage (23), comme un degré de stockage et/ou un état de stockage à des unités d'expédition (2), et un système de répartition des unités d'expédition pour l'adaptation mutuelle des nombres caractéristiques de stockage entre les étagères de stockage (23), où le système de répartition des unités d'expédition, dans plusieurs sections de stockage, présente la station d'alimentation (17), les stations d'émission (48) et la technique de convoyage automatisée avec au moins une voie de circulation de convoyage (46) s'étendant entre les étagères de stockage (23) et avec un véhicule de convoyage d'étagères (27) qui est déplaçable dans les ruelles (24), et **en ce que** les unités d'expédition (2), pour la consolidation suivante, sont transportées par le système de répartition des unités d'expédition aux stations d'émission (48).

14. Système de stockage selon la revendication 13, **caractérisé en ce que** le système de répartition des unités d'expédition comprend à proximité de la station d'émission (48) une voie de circulation d'introduction (61) pour le transfert d'unités d'expédition (2) d'une priorité plus élevée sur une voie de convoyage de transfert et de tamponnage (47, 59).
